# EUROPÄISCHE PATENTANMELDUNG

(11) **EP 3 311 950 A1**
(43) Veröffentlichungstag der Anmeldung: **25.04.2018**
(21) Anmeldenummer: 16194691.8
(22) Anmeldetag: 19.10.2016
(51) Int. Cl.: B23Q 7/04, B21D 43/02, B21D 43/11, B23K 37/04, B23K 26/38, B65D 6/26, B65D 5/20, B65H 5/00, B23K 26/70, B23Q 7/10

(54) **TRANSPORTVORRICHTUNG, VERFAHREN UND COMPUTERPROGRAMMPRODUKT ZUM BELADEN UND ENTLADEN ZUMINDEST EINER MATERIALBEARBEITUNGSMASCHINE**

(71) Anmelder: Bystronic Laser AG, 3362 Niederönz (CH)
(72) Erfinder: IMBODEN, Ernest, 4556 Steinhof (CH)
(74) Vertreter: Patentbüro Paul Rosenich AG

(57) **Zusammenfassung**

Die Erfindung betrifft eine Transportvorrichtung (10) zum kollisionsfreien Beladen und Entladen von einer Materialbearbeitungsmaschine (1) mit einem Werkstück (5) umfassend eine Führungsvorrichtung (60), mehrere Transporteinrichtungen (15, 16, 17, 18), wobei eine der Transporteinrichtungen (15) in einer ersten Transporteinrichtungsebene (20) sowie eine weitere Transporteinrichtung (16) in einer weiteren Transporteinrichtungsebene (21) angeordnet ist. Eine multifunktionale Werkzeugvorrichtung (25) zum Transportieren und/oder Bearbeiten des Werkstücks (5) oder des Werkstückteils ist an der Transporteinrichtung (15) angeordnet. Weiter betrifft die Erfindung ein Verfahren zum Beladen und Entladen der Materialbearbeitungsmaschine (1) mit einer solchen Transportvorrichtung (10) sowie ein Computerprogrammprodukt zum Beladen und Entladen nach diesem Verfahren und mit einer solchen Transportvorrichtung (10).

## Beschreibung

Die Erfindung betrifft eine Transportvorrichtung zum Beladen und Entladen von zumindest einer Materialbearbeitungsmaschine nach dem Oberbegriff des Anspruchs 1. Weiter betrifft die Erfindung ein Verfahren zum Beladen und Entladen einer Materialbearbeitungsmaschine unter Verwendung einer solchen Transportvorrichtung nach dem Anspruch 15 sowie ein Computerprogrammprodukt zum automatischen Ausführen eines Prozessablaufs unter Verwendung eines solche Verfahrens und einer solchen Transportvorrichtung nach Anspruch 17.

In der industriellen Fertigung werden Vorrichtungen und Verfahren zum Beladen und Entladen von Materialbearbeitungsmaschinen, wie beispielsweise Laserschneidmaschinen oder Fluidstrahlschneidmaschinen, wie Wasserstrahlschneidmaschinen, vielseitig eingesetzt. Um die Produktivität der Materialbearbeitungsmaschinen zu erhöhen, werden die Transportvorrichtungen und Verfahren zum Beladen und Entladen der Materialbearbeitungsmaschinen mit Werkstücken vollautomatisch ausgeführt. Bei Grossanlagen werden die unbearbeiteten Werkstücke aus einem Werkstückspeichersystem zur Materialbearbeitungsmaschine transportiert, bearbeitet und anschliessend entweder in einem weiteren Werkstückspeichersystem abgelagert oder neben der Materialbearbeitungsmaschine gestapelt. Die bereits bearbeiteten Werkstückteile sind dabei meist hohen mechanischen Belastungen ausgesetzt, wobei sich bei einer Beschädigung der bereits bearbeiteten Werkstückteile der Werkstückausschuss massiv erhöht.

Die CN101623796A zeigt eine Transportvorrichtung zum automatischen Beladen und Entladen einer Laserschneidmaschine mit einem Pelletier-Roboter zum Sortieren von Werkstücken und einem Entladeroboter, welche beide an einer Führungsschiene bewegbar angeordnet sind.

Nachteilig an dieser Transportvorrichtung ist, dass die beiden bewegbaren Roboter sich in Ihrer Bewegungsrichtung entlang der Führungsschiene nicht kreuzen können und eine Bearbeitung am Werkstück mit diesen Robotern nicht durchführbar ist. Daher ist die bekannte Transportvorrichtung für komplexe Prozessarbeitsschritte mit einem hohen Durchsatz ungeeignet.

Die Friedrich Remmert GmbH bietet unter den Namen «Laser FLEX» eine Transportvorrichtung zum Beladen und Entladen einer Materialbearbeitungsmaschine mit mehreren Transporteinrichtungen an, welche in zwei Transporteinrichtungsebenen entlang einer Führungsvorrichtung bewegbar angeordnet sind.

Nachteilig an dieser Transportvorrichtung ist, dass nur einfache Beladeschritte und Entladeschritte von einheitlich grossen Werkstücken mit dieser Transportvorrichtung durchführbar sind, womit eine hohe Standzeit im Prozess entsteht und die Produktivität der Gesamtanlage stark reduziert wird.

Die WO2008/139409A1 zeigt eine Transportvorrichtung zum Beladen und Entladen von Schneidmaschinen umfassend ein Schienenpaar als Führungsvorrichtungsträger zum Führen von bewegbaren Robotereinheiten, welche bewegbare Werkzeugvorrichtungen mit einem magnetischen Aufnahmekopf und einer Saugeinrichtung aufweisen. Diese Transportvorrichtung umfasst weiter eine stationäre Werkzeugwechselstation zum Lagern verschiedener Saugwerkzeuge, welche bedarfsweise an den Aufnahmekopf der mechanischen Transporteinheit angeordnet werden.

Nachteilig weist die bekannte Transportvorrichtung nur eine Bewegungsebene zum horizontalen Bewegen der Robotereinheiten auf, womit nur ein einfaches Beladen und Entladen bei geringer Produktivität sowie geringer Werkstücktransportkapazität möglich ist.

Aufgabe der vorliegenden Erfindung ist es, eine Transportvorrichtung zum Beladen und Entladen von zumindest einer Materialbearbeitungsmaschine mit zumindest einem Werkstück zu schaffen, welche die vorgenannten Nachteile nicht aufweist und insbesondere bei komplexen Beladeschritten und Entladeschritten eine hohe Transportkapazität aufweist, sowie werkstückschonende Prozessarbeitsschritte am Werkstück oder an einem aus einem Werkstück herausgelösten Werkstückteil ermöglicht. Weiter ist es die Aufgabe der Erfindung ein Verfahren zum Beladen und Entladen mit zumindest einem Werkstück oder zumindest eines aus einem Werkstück herausgelösten Werkstückteils mit einer Transportvorrichtung zu ermöglichen und ein Computerprogrammprodukt für ein solches Verfahren bereit zu stellen.

Die Aufgabe wird durch die Merkmale der unabhängigen Ansprüche gelöst. Vorteilhafte Weiterbildungen sind in den Figuren und in den abhängigen Patentansprüchen dargelegt.

Gemäss der Erfindung wird dies bei einer Transportvorrichtung zum Beladen und Entladen von zumindest einer Materialbearbeitungsmaschine mit zumindest einem Werkstück oder mit zumindest einem aus einem Werkstück herausgelösten Werkstückteil, eine Führungsvorrichtung, mehrere Transporteinrichtungen, welche an der Führungsvorrichtung angeordnet sind, wobei eine der Transporteinrichtungen in einer ersten Transporteinrichtungsebene angeordnet ist und zumindest eine bewegbare Werkzeugvorrichtung aufweist, dadurch erreicht, dass zumindest eine weitere Transporteinrichtungsebene vorgesehen ist, worin zumindest eine der weiteren Transporteinrichtungen angeordnet ist, sowie die zumindest eine Werkzeugvorrichtung multifunktional zum Transportieren des Werkstücks oder mit zumindest eines aus einem Werkstück herausgelösten Werkstückteils ausgebildet ist.

Mit einer derartigen Transportvorrichtung lassen sich die Produktionskapazität und die Transportkapazität in einer Industrieanlage mit zumindest einer Materialbearbeitungsmaschine wesentlich verbessern, da gleichzeitig mehrere Prozessarbeitsschritte in den verschiedenen Transporteinrichtungsebenen der Transportvorrichtung durchgeführt werden können. Durch die Integration weiterer Prozessarbeitsschritte, werden nachgelagerte (meist manuelle) Arbeitsschritte verhindert, wodurch der gesamte Prozessablauf verbessert wird. Die multifunktionale Werkzeugvorrichtung ermöglicht ein rasches und schonendes Beladen und Entladen von Werkstücken oder bereits bearbeiteten Werkstückteilen der zumindest einen Materialbearbeitungsmaschine, womit der Werkstückausschuss stark reduziert wird.

In einer alternativen Ausführungsform der Transportvorrichtung ist die zumindest eine multifunktionale Werkzeugvorrichtung zum Bearbeiten des Werkstücks oder mit zumindest eines aus einem Werkstück herausgelösten Werkstückteils ausgebildet, womit eine Werkstückbearbeitung direkt in der und mit der Transportvorrichtung ermöglicht wird. Damit werden Prozessarbeitsschritte, wie beispielsweise das Entfernen von Schneidresten am Werkstück, in der Transportvorrichtung durchführbar. Dies ermöglicht ein werkstückschonendes Stapeln der bearbeiteten Werkstücke oder Werkstückteile und unterbindet Beschädigungen am bereits bearbeiteten Werkstück.

In einer weiteren Alternative ist die zumindest eine multifunktionale Werkzeugvorrichtung zum Transportieren und zum Bearbeiten des Werkstücks oder des zumindest einen aus einem Werkstück herausgelösten Werkstückteils ausgebildet. Somit sind komplexe Prozessarbeitsschritte in der Transportvorrichtung durchführbar, ohne dass das Werkstück oder das Werkstückteil die Transportvorrichtung verlassen beziehungsweise aus dieser heraus transportiert werden muss. Dies führt zu einer massiven Produktivitätsverbesserung im gesamten Prozessablauf in einer Industrieanlage mit zumindest einer Materialbearbeitungsmaschine.

Unter dem Begriff Werkstück wird in diesem Zusammenhang neben einem grossflächigen unbearbeiteten Werkstück auch ein bereits bearbeitetes Werkstück, wie beispielsweise ein Halbfabrikat oder ein Restgitter verstanden. Dabei sind diverse Materialien für das Werkstück sowie für ein aus einem Werkstück herausgelöste Werkstückteil, wie beispielsweise ein Rohblech, eine Glasplatte oder ein Restblech, verwendbar.

Unter den Begriff multifunktionale Werkzeugvorrichtung ist in diesem Zusammenhang eine Werkzeugvorrichtung zu verstehen, welche zum Durchführen von mehreren Prozessarbeitsschritten oder Prozessschritten mit unterschiedlich komplexen Schwierigkeitsgraden ausgebildet ist und vorteilhaft eine schonende Behandlung des Werkstücks oder einem aus einem Werkstück herausgelösten Werkstückteils ermöglicht. Unter einem Prozessarbeitsschritt ist in diesem Zusammenhang jeder Vorgang zu verstehen, der am Werkstück ausgeführt wird. Ein Prozessarbeitsschritt umfasst als eine nichtabschliessende Aufzählung einen Transport, eine Positionierung, eine Reinigung, eine Markierung, eine Bedruckung, eine Sortierung, eine mechanische Bearbeitung, wie ein Gewindeschneiden, ein Fräsen, ein Ansenken, ein Anbringen von Gewindeeinsätzen, ein Anbringen von Schweissbolzen sowie eine Laserbearbeitung, Fluidstrahlbearbeitung, eine Beschichtung usw. des Werkstücks in der Transportvorrichtung.

Unter dem Begriff Prozessschritt ist in diesem Zusammenhang jeder Vorgang zu verstehen, der ohne direkten Bezug zu einem Werkstück ausgeführt wird, wie beispielsweise ein Werkzeugwechsel an einer Werkzeugvorrichtung. Prozessarbeitsschritte und Prozessschritte definieren in der Summe einen Prozessablauf.

Eine Transporteinrichtungsebene ist eine Ebene in der Transportvorrichtung, die von zwei Geraden aufgespannt wird, welche insbesondere orthogonal zueinanderstehen. Die erste dieser Geraden ist relativ entlang der Längserstreckung der zumindest ersten Transporteinrichtung in der Transportvorrichtung angeordnet und die zweite dieser Geraden ist entlang der Bewegungsrichtung der zumindest ersten Transporteinrichtung in der Transportvorrichtung ausgerichtet. Die erste Transporteinrichtungsebene ist relativ zu einer weiteren Transporteinrichtungsebene angeordnet, vorteilhaft parallel dazu angeordnet. In einer Variante dazu können die Transporteinrichtungsebenen, zumindest teilweise, auch in einem Winkel relativ zueinander verlaufen.

Vorzugsweise ist die zumindest eine multifunktionale Werkzeugvorrichtung geradlinig bewegbar an einer der Transporteinrichtung angeordnet, wodurch die Transportkapazität der Transportvorrichtung mit Transporteinrichtungen in unterschiedlichen Transporteinrichtungsebenen erhöht wird. Eine an der Transporteinrichtung angeordnete geradlinig bewegbare Werkzeugvorrichtung kann neben einem Transportarbeitsschritt auch weitere Prozessarbeitsschritte am Werkstück oder weitere Prozessschritte in der Transportvorrichtung ausführen. Gleichzeitig nimmt eine der Transporteinrichtungen in einer weiteren Transporteinrichtungsebene einen Prozessarbeitsschritt an einem weiteren Werkstück vor, wobei der Prozessablauf parallel und kollisionsfrei erfolgt. Die geradlinig bewegbare Werkzeugvorrichtung, welche aus und insbesondere vollständig aus einer Transporteinrichtungsebene und in eine zumindest eine weitere Transporteinrichtungsebene bewegbar ist, ermöglicht einen besonders flexiblen Einsatz und einen konstruktiv einfachen Aufbau der multifunktionalen Werkzeugvorrichtung. Unter geradlinig bewegbar wird in diesem Zusammenhang eine Bewegung entlang einer Gerade verstanden, welche relativ zur Transporteinrichtung ausgerichtet ist. Beispielsweise (jedoch nicht einschränkend) ist die Werkzeugvorrichtung entlang einer Geraden gradlinig bewegbar, die senkrecht zu der Transporteinrichtung ausgerichtet ist. Damit lässt sich eine besonders einfache Bewegung der Werkzeugvorrichtung an der Transporteinrichtung realisieren, beispielsweise mit einem ausfahrbaren und einziehbaren Arm, vorteilhaft einem geradlinig ausfahrbaren und einziehbaren Teleskoparm.

In einer alternativen Ausführungsform ist die multifunktionale Werkzeugvorrichtung schwenkbar bewegbar an der zumindest einen Transporteinrichtung angeordnet, womit eine besonders platzsparende Ausführungsform der Transporteinrichtung ausgebildet ist, da die Werkzeugvorrichtung vollständig aus einer Transporteinrichtungsebene schwenkbar ist. Dies ist bei der Verwendung der Transportvorrichtung in Produktionshallen mit beschränkten Platzverhältnissen, insbesondere in Bezug auf die Innenhöhe der Produktionshalle, besonders vorteilhaft. Eine geringe Bauhöhe der Transportvorrichtung ist ebenfalls vorteilhaft, wenn die Transportvorrichtung beispielsweise als Ganzes in einen Transportcontainer verladebar sein soll, um beispielsweise einen besonders raschen und kostengünstigen Transport der der Transportvorrichtung hin zu einer Industrieanlage zu ermöglichen.

Alternativ ist die Werkzeugvorrichtung schwenkbar und geradlinig bewegbar an der zumindest einen Transporteinrichtung angeordnet. Eine schwenkbar und geradlinig bewegbare Werkzeugvorrichtung ist besonders flexibel einsetzbar, da zusätzlich ein kollisionsfreier Prozessarbeitsschritt entlang einer Gerade, welche vorteilhaft relativ zur Lotrechten der Werkzeugvorrichtung angeordnet ist, in der einen Transporteinrichtungsebene oder der zumindest einen weiteren Transporteinrichtungsebene innerhalb der Transportvorrichtung, ausführbar ist. Die Schwenkbewegung und die geradlinige Bewegung der Werkzeugvorrichtung sind entweder gleichzeitig oder hintereinander ausführbar.

Alternativ ist die Werkzeugvorrichtung drehbar an der zumindest einen Transporteinrichtung angeordnet, womit eine einfache und kompakte Realisierung einer bewegbaren Werkzeugvorrichtung umgesetzt wird und weiter kollisionsfreie Prozessarbeitsschritte entlang einer weiteren Gerade, welche vorteilhaft relativ zur Lotrechten der Werkzeugvorrichtung angeordnet ist, in der zumindest einen Transporteinrichtungsebene oder der weiteren Transporteinrichtungsebene innerhalb der Transportvorrichtung, ausführbar ist.

Alternativ ist die Werkzeugvorrichtung drehbar und schwenkbar bewegbar an der zumindest einen Transporteinrichtung angeordnet, wodurch eine weitere kostengünstige und platzsparende Anordnung der Werkzeugvorrichtung an der Transporteinrichtung umsetzbar ist. Die Schwenkbewegung und die Drehbewegung der Werkzeugvorrichtung sind entweder gleichzeitig oder hintereinander ausführbar.

Alternativ ist die Werkzeugvorrichtung drehbar und geradlinig bewegbar an der zumindest einen Transporteinrichtung angeordnet. Eine drehbar und geradlinig bewegbare Werkzeugvorrichtung ist für die kollisionsfreie Umsetzung von komplexen Prozessarbeitsschritten einsetzbar, welche ausserhalb der Transporteinrichtungsebenen ausgeführt werden. Die Schwenkbewegung und die Drehbewegung der Werkzeugvorrichtung sind entweder gleichzeitig oder hintereinander ausführbar.

Alternativ ist die Werkzeugvorrichtung schwenkbar und drehbar und geradlinig bewegbar an der zumindest einen Transporteinrichtung angeordnet. Diese Anordnungsform der Werkzeugvorrichtung an der zumindest einen Transporteinrichtung ist für höchst komplexe Prozessarbeitsschritte oder Prozessschritte in der zumindest einen Transporteinrichtungsebene oder der weiteren Transporteinrichtungsebene innerhalb der Transportvorrichtung geeignet. Weiter ist eine derartige multifunktionale Werkzeugvorrichtung im Prozessablauf über einen grossen Arbeitsbereich der Transportvorrichtung kollisionsfrei einsetzbar, womit die Transportkapazität massgeblich erhöht wird. Die Schwenkbewegung und die Drehbewegung sowie die geradlinige Bewegung der Werkzeugvorrichtung sind entweder gleichzeitig oder hintereinander ausführbar.

In einer bevorzugten Ausführungsform ist die zumindest eine Werkzeugvorrichtung entlang der zumindest einen Transporteinrichtung bewegbar angeordnet, womit der Arbeitsbereich der Werkzeugvorrichtung in der Transportvorrichtung erweitert und sogar ansonsten unerreichbare Werkstückpositionen für die Werkzeugvorrichtung zugänglich werden. Vorteilhaft ist zumindest eine Bewegungsvorrichtung für die Werkzeugvorrichtung vorgesehen, die beispielsweise ein Führungssystem aufweist, welches einerseits an der Transporteinrichtung und andererseits an der Werkzeugvorrichtung angeordnet ist. Damit lässt sich die Bewegung der Werkzeugvorrichtung entlang der Transporteinrichtung besonders einfach führen und die Werkzeugeinheit ist, beispielsweise aus einem möglichen Kollisionsbereich mit den weiteren Transporteinrichtungen, einfach verfahrbar.

Bevorzugt weist die zumindest eine multifunktionale Werkzeugvorrichtung zumindest eine Werkzeugeinheit zum Bearbeiten und/oder Transportieren eines Werkstücks oder zumindest eines aus einem Werkstück herausgelösten Werkstückteils auf, womit zumindest ein komplexer Prozessarbeitsschritt direkt in der Transportvorrichtung durchführbar ist. Damit wird eine enorme Zeitersparung im Prozessablauf und damit ein erhöhter Werkstückdurchsatz erreichbar.

Vorzugsweise ist die Werkzeugeinheit relativ zu der Transporteinrichtungsebene bewegbar, womit ausgehend von der zumindest einen Werkzeugeinheit in einer ersten Transporteinrichtungsebene zumindest ein Prozessarbeitsschritt an einem weiteren Werkstück in einer zumindest weiteren Transporteinrichtungsebene mit der Werkzeugeinheit einfach ausführbar ist. Der Prozessarbeitsschritt der bewegbaren Werkzeugeinheit ist dabei gleichzeitig mit einem Prozessarbeitsschritt einer der weiteren Transporteinrichtungen in der weiteren Transporteinrichtungsebene kollisionsfrei ausführbar, womit die Effizienz des Prozessablaufs verbessert wird.

Vorteilhaft weist die zumindest eine multifunktionale Werkzeugvorrichtung eine Bewegungseinrichtung auf, welche weiter vorteilhaft zwischen zumindest einem Ende der Werkzeugeinheit und dem Werkzeug angeordnet ist. Die Bewegungseinrichtung ermöglicht eine Relativbewegung des Werkzeugs zur Werkzeugeinheit, womit flexible und komplexe Prozessarbeitsschritte am Werkstück in der Transportvorrichtung ausführbar sind. Die Bewegungseinrichtung umfasst beispielsweise ein Schwenkgelenk und/oder Drehgelenk, um welches das Werkzeug oder zumindest ein Teil der Werkzeugeinheit schwenkbar bzw. drehbar ist.

Bevorzugt weist die zumindest eine Werkzeugvorrichtung zumindest eine weitere Werkzeugeinheit zum Bearbeiten und/oder Transportieren eines Werkstücks oder zumindest eines aus einem Werkstück herausgelösten Werkstückteils auf, womit ein weiterer Prozessarbeitsschritt mit der zumindest einen weiteren Werkzeugeinheit am Werkstück realisierbar ist. Dies ermöglicht eine schnelle und aufwendige Bearbeitung und/oder einen schnelleren Transport, womit die Produktivität im Prozessablauf in der Transportvorrichtung weiter gesteigert wird.

Vorzugsweise ist die zumindest eine Werkzeugvorrichtung um eine Achse schwenkbar und/oder drehbar, welche parallel zu zumindest einer Transporteinrichtungsebene der Transportvorrichtung ausgerichtet ist. Dies ermöglicht eine definierte Bewegung der Werkzeugvorrichtung, welche somit einerseits eine präzise Ausführung eines Prozessarbeitsschritts am Werkstück oder Werkstückteil erlaubt und andererseits eine ungewollte Kollision, beispielsweise eine Kollision der Werkzeugvorrichtung mit einer Transporteinrichtung in der weiteren Transporteinrichtungsebene, verhindert. Dabei ist es vorteilhaft, dass die zur Transporteinrichtungsebene parallel angeordnete Achse relativ um eine zur Transporteinrichtungsebene normal angeordnete Achse, positionierbar ist, womit eine weitreichende und komplexe Positionierung der zumindest einen Werkzeugvorrichtung möglich ist.

Alternativ ist die Werkzeugvorrichtung um eine weitere Achse schwenkbar oder drehbar, welche normal zu zumindest einer Transporteinrichtungsebene der Transportvorrichtung ausgerichtet ist, womit eine raumsparende Transportvorrichtung realisiert wird. Die Transporteinrichtung kann samt Werkzeugvorrichtung an ihrer Position verharren und muss nicht in eine Parkposition bewegt werden um eine ansonsten möglichen Kollision mit einer der weiteren Transporteinrichtungen zu vermeiden.

Alternativ ist die zumindest eine Werkzeugvorrichtung um eine Achse schwenkbar oder drehbar, welche parallel zu der zumindest einen Transporteinrichtungsebene der Transportvorrichtung ausgerichtet ist und um eine weitere Achse schwenkbar oder drehbar, welche normal zu der zumindest einen Transporteinrichtungsebene der Transportvorrichtung ausgerichtet ist. Damit wird eine erhöhte Bewegungsflexibilität der Werkzeugvorrichtung bezüglich der zumindest einen Transporteinrichtungsebene erreicht und eine erhöhte Prozessablaufkomplexität ist umsetzbar. Dadurch sind eine Vielzahl von Prozessarbeitsschritte, wie beispielsweise das Transportieren oder Bearbeiten in eine Richtung relativ zu den Transporteinrichtungsebenen, ausführbar.

Alternativ ist die zumindest eine Werkzeugvorrichtung entlang zumindest einer der vorab genannten Achsen geradlinig bewegbar angeordnet, womit eine besonders einfach konstruktive und kostengünstige Ausführungsform möglich ist.

Alternativ ist die zumindest eine Werkzeugvorrichtung um eine Achse schwenkbar oder drehbar, welche parallel zu der zumindest einen Transporteinrichtungsebene der Transportvorrichtung ausgerichtet ist, angeordnet und um eine weitere Achse schwenkbar oder drehbar angeordnet, welche normal zu der zumindest einen Transporteinrichtungsebene der Transportvorrichtung ausgerichtet ist und entlang zumindest einer dieser Achsen geradlinig bewegbar angeordnet. Damit ist der Vorteil einer raumsparenden Ausführungsform mit einem komplexen Prozessablauf kollisionsfrei kombinierbar und die Verwendung der Transportvorrichtung in Industriegebäuden mit geringer Raumhöhe möglich.

Vorzugsweise weist die zumindest eine Werkzeugvorrichtung eine Erkennungseinheit zum Erkennen eines Prozessparameters auf, womit beispielsweise eine vordefinierte Bearbeitungsposition am Werkstück erkannt wird. Somit ist in weiterer Folge eine Markierung am Werkstück oder eine vorab bekannte Bearbeitungsposition wieder auffindbar. Damit lässt sich ein Prozessarbeitsschritt an einem bereits in einer Materialbearbeitungsmaschine bearbeiteten Werkstück oder Werkstückteil weiterbearbeiten, ohne dass das Werkstück oder das Werkstückteil aus der Transportvorrichtung entfernt werden muss. Gerade bei einfachen Prozessarbeitsschritten, wie beispielsweise Entgraten von Schneidkanten, ist somit eine erhöhte Produktivität ohne zusätzliche externe Bearbeitungsmaschinen möglich.

Vorteilhaft weist die Erkennungseinheit der zumindest eine Werkzeugvorrichtung einen Detektor zum Erkennen eines Prozessparameters auf. Der Prozessparameter wird beispielsweise mittels einer Bilderkennungseinheit oder einer elektromagnetischen Detektionseinheit erkannt bzw. aufgenommen und dann vorteilhaft zeitnah in einem Prozessablauf weiterverarbeitet, womit in den entsprechenden Prozessablauf, z. B. der Werkzeugvorrichtung, einer Transporteinrichtung, der Transportvorrichtung oder gar in die zumindest eine Materialbearbeitungsmaschine, eingegriffen werden kann.

Vorzugsweise weist die zumindest eine Werkzeugeinheit ein Werkzeug auf. Mithilfe des Werkzeuges werden Bearbeitungsschritte am Werkstück oder Werkstückteil mit der Werkzeugvorrichtung ausführbar.

Bevorzugt weist die zumindest eine Werkzeugeinheit eine Werkzeugaufnahmeeinheit zum Aufnehmen zumindest eines Werkzeugs auf, womit eine Werkzeugeinheit bedarfsweise und vorteilhaft gesteuert mehrere verschiedene Werkzeuge zum Bearbeiten und/oder Transportieren des Werkstücks oder Werkstückteils aufnehmen kann und daher besonders flexibel einsetzbar ist.

Vorzugsweise ist das Werkzeug der Werkzeugvorrichtung aus der Gruppe der Fertigungswerkzeuge, wie ein Umformwerkzeug, ein Trennwerkzeug, ein Fügewerkzeug, ein Beschichtungswerkzeug sowie ein generatives Fertigungsverfahrenswerkzeug wählbar. Somit sind vorteilhafterweise die an den jeweiligen Prozessarbeitsschritt angepassten Werkzeuge verwendbar und Prozessarbeitsschritte mit unterschiedlichen Werkzeugen möglich. Dies erhöht zusätzlich die Produktivität der Transportvorrichtung.

Vorteilhaft ist das Werkzeug der Werkzeugeinheit an der Werkzeugvorrichtung als Transportwerkzeug ausgebildet, womit eine weitere einfache Transporteinrichtung, insbesondere zum Entfernen von bereits bearbeiteten Werkstückteilen eines Werkstücks, realisierbar ist.

Vorteilhaft ist das Werkzeug der Werkzeugeinheit an der Werkzeugvorrichtung als Markierwerkzeug ausgebildet, womit der ansonsten aufwendige Prozessarbeitsschritt des Markierens besonders effizient realisierbar ist. Eine Positionsauffindung am Werkstück, insbesondere mit der Erkennungseinheit der Werkzeugvorrichtung, ist aufgrund der aufgebrachten Markierung besonders einfach und zeitnahe möglich, wie auch eine neuerliche Positionierung eines Werkstücks oder eines bereits herausgelösten Werkstückteils realisierbar ist. Somit kann ein markiertes Werkstück oder eines aus einem Werkstück herausgelösten Werkstückteils abtransportiert werden und ein weiterer Prozessarbeitsschritt an einem unmarkierten Werkstück oder ein aus einem Werkstück herausgelösten Werkstückteils durchgeführt werden.

Bevorzugt sind zumindest eine Transporteinrichtung in einer Transporteinrichtungsebene der Transportvorrichtung und zumindest eine weitere Transporteinrichtung in der gleichen oder der weiteren Transporteinrichtungsebene der Transportvorrichtung relativ zueinander auf der Führungsvorrichtung bewegbar angeordnet. Somit wird ein weitläufiger Arbeitsbereich und eine Vielzahl komplexer Prozessarbeitsschritte mithilfe mehrerer Transporteinrichtungen an mehreren Materialbearbeitungsmaschinen innerhalb der Transportvorrichtung ermöglicht. Damit werden parallel ablaufende Prozessarbeitsschritte zum Erhöhen der Produktivität und/oder Taktzeiten in der Transportvorrichtung umsetzbar.

Vorzugsweise sind die zumindest eine Transporteinrichtung und die zumindest eine weitere Transporteinrichtung zumindest in einer Bewegungsrichtung relativ zueinander kreuzend bewegbar, womit eine kollisionsfreie Bewegung der an der Führungsvorrichtung angeordneten Transporteinrichtungen möglich ist. Eine kreuzende Bewegung ist in diesem Zusammenhang in einer weitgehend horizontalen Richtung entlang der Führungsvorrichtung sowie auch in einer weitgehend vertikalen Richtung relativ zur Führungsvorrichtung der Transportvorrichtung zu verstehen. Damit sind komplexe Prozessarbeitsschritte, wie Beladeschritte, Entladeschritte, Zwischenlagerungsschritte, Sortierschritte sowie Bearbeitungsschritte an einer, beziehungsweise mehreren, Materialbearbeitungsmaschinen in der Transportvorrichtung umsetzbar.

Bevorzugt sind zumindest zwei Transporteinrichtungen in einer gemeinsamen Transporteinrichtungsebene vorgesehen, womit eine platzsparende Ausführungsform realisierbar ist. Damit ist beispielsweise eine Transporteinrichtung als bewegliches Zwischenlager für unbearbeitete Werkstücke ausgebildet, welches beispielsweise von Personen, mit einem Kran oder mit einem Stapler, von mehreren Seiten des Zwischenlagers einfach befüllbar ist.

Vorzugsweise sind zumindest zwei Transporteinrichtungen in einer gemeinsamen Transporteinrichtungsebene vorgesehen, wobei diese gemeinsame Transporteinrichtungsebene zwischen einer Transporteinrichtungsebene und einer weiteren Transporteinrichtungsebene angeordnet ist. Somit weist die Transportvorrichtung in dieser Ausführungsform zumindest drei Transporteinrichtungsebenen auf, wobei zumindest in einer Transporteinrichtungsebene mehrere Transporteinrichtungen bewegbar angeordnet sind und zumindest eine Transporteinrichtung eine multifunktionale Werkzeugvorrichtung aufweist, womit komplexe Prozessarbeitsschritte kollisionsfrei ausgeführt werden und die Produktionskapazität maximiert wird.

Vorteilhaft sind zumindest zwei Transporteinrichtungen in einer gemeinsamen Transporteinrichtungsebene vorgesehen, wobei diese gemeinsame Transporteinrichtungsebene zwischen einer Transporteinrichtungsebene und der zumindest einen Materialbearbeitungsmaschine angeordnet ist, womit eine kompakte Transportvorrichtung insbesondere für Räumlichkeiten mit geringer Bauhöhe realisierbar ist, welche eine sehr hohe Transportkapazität und Prozessablaufkapazität aufweist.

Bevorzugt ist zumindest eine Transporteinrichtung als ein Materiallagerwagen ausgeführt, womit beispielsweise die Prozessablaufzeit verkürzt wird, da bei einem laufenden Prozessablauf kein Material von aussen in die Transportvorrichtung zugeführt werden muss und gleichzeitig mehrere Materialbearbeitungsmaschinen bestückbar sind.

Vorteilhaft ist zumindest eine Transporteinrichtung ein Werkzeugwechselwagen, womit die Werkzeugwechselzeit verringert wird, da der Werkzeugwechselwagen, beispielsweise relativ zur Werkzeugeinheit, bewegbar ist und somit ein Werkzeugwechsel an jeder gewünschten Stelle ermöglicht wird. Am Werkzeugwechselwagen ist vorteilhaft ein Werkzeuglagerabschnitt zum Zwischenlagern von Werkzeugen, beispielsweise von Markierwerkzeugen, angeordnet, wobei der Werkzeuglagerabschnitt in einer besonders vorteilhaften Ausführungsform relativ zum Werkzeugwechselwagen bewegbar angeordnet ist. Damit ist ein besonders zeitsparender Werkzeugwechsel möglich und die Standzeiten der Transporteinrichtungen in der Transportvorrichtung werden minimiert.

Bevorzugt ist zumindest eine Transporteinrichtung ein Materialtransportwagen, womit zumindest ein Werkstück einfach zu der zumindest einen Materialbearbeitungsmaschine transportiert wird.

Vorteilhaft ist der zumindest eine Materialtransportwagen ein Doppelgabeltransportwagen, welcher für ein einfaches Beladen und Entladen von grossflächigen Werkstücken besonders geeignet ist.

Vorteilhaft ist der zumindest eine Materialtransportwagen ein Saugvorrichtungstransportwagen, welcher für Werkstücke mit verschiedene Werkstückdimensionen einsetzbar ist. Die Sauger der Saugvorrichtung werden vorteilhaft einzeln und weiter vorteilhaft unabhängig voneinander, beispielsweise mit einem Unterdruck, beaufschlagt.

Vorzugsweise ist am zumindest einen Materialtransportwagen ein Werkstücklagerabschnitt zum Zwischenlagern von Werkstücken, insbesondere ein Stapel von Werkstücken oder zum Zwischenlagern von zumindest einem Werkzeug, angeordnet, wobei der Werkstücklagerabschnitt in einer alternativen Ausführungsform relativ zum Materialtransportwagen bewegbar angeordnet ist, womit eine Transporteinrichtung mit einem Materialtransportwagen und einem Werkstücklagerabschnitt besonders effizient genützt werden kann und zumindest ein Prozessarbeitsschritt mithilfe des bewegbaren Materialtransportwagen ausführen lässt.

Vorteilhaft wird der Transporteinrichtung mit einem Werkstücklagerabschnitt zum Lagern von zumindest einem Werkstück oder einem aus einem Werkstück herausgelösten Werkstückteil oder zumindest einem Werkzeug in einer Transporteinrichtungsebene angeordnet, welche zwischen zumindest einer ersten Transporteinrichtungsebene und einem Werkstückaufnahmetisch der Materialbearbeitungsmaschine angeordnet ist. Die erste Transporteinrichtungsebene weist in dieser Ausführungsform eine bewegbare Transporteinrichtung auf, woran insbesondere die zumindest eine multifunktionale Werkzeugvorrichtung angeordnet ist. Damit lässt sich ein effizienter Prozessarbeitsschritt an der Materialbearbeitungsmaschine mit der Transporteinrichtung und gleichzeitig ein Prozessarbeitsschritt oder ein Prozessschritt am Werkstücklagerabschnitt der Transporteinrichtung mit der multifunktionalen Werkzeugvorrichtung ausführen.

In einer alternativen Ausführungsform ist ein Materialwagen in derselben Ebene wie die Transportvorrichtung angeordnet, wobei dafür vorteilhaft eine separate Führungsvorrichtung vorgesehen ist und der Materialwagen relativ zur Transportvorrichtung bewegbar angeordnet ist. Damit ist vorteilhaft eine zusätzliche Materiallagerebene in der Transportvorrichtung angeordnet, welche beispielsweise von der Führungsvorrichtung der Transportvorrichtung abgekoppelt ist und besonders vorteilhaft mit der Transportvorrichtung zusammenwirkt, sodass die Prozessablaufzeit verkürzt und die Produktivität verbessert wird. Der Materialwagen ist vorteilhaft auf dem Industrieanlageboden angeordnet.

In einer weiteren Ausführungsform dient der Werkstücklagerabschnitt auch der Lagerung von Werkzeugen beziehungsweise der Werkzeuglagerabschnitt dient auch der Lagerung von Werkstücken oder Werkstückteilen.

Vorzugsweise sind zumindest zwei Führungsvorrichtungsträger mit jeweils einer Längserstreckung zum Führen von zumindest einer Transporteinrichtung in der Transportvorrichtung vorgesehen. Zwei Führungsvorrichtungsträger sorgen für einen stabilen Bewegungsablauf der Transporteinrichtungen, insbesondere wenn das Werkstück einerseits ein hohes Eigengewicht aufweisen und andererseits rasch von einer Position in der Transportvorrichtung zu einer anderen Position in der Transportvorrichtung bewegt wird.

Bevorzugt sind die Führungsvorrichtungsträger parallel zu der zumindest einen Transporteinrichtungsebene der Transportvorrichtung angeordnet, womit die Statik der Transportvorrichtung besonders verbessert wird und rasche Prozessarbeitsschritte durchführbar sind.

Vorzugsweise sind zumindest zwei Transporteinrichtungen vorgesehen, wobei jeder Führungsvorrichtungsträger zumindest zwei Führungsabschnitte zum Führen der Transporteinrichtungen aufweist, womit die Transporteinrichtungen unabhängig voneinander in deren eigenen Transporteinrichtungsebenen bewegbar sind.

Bevorzugt ist zumindest einer der Führungsabschnitte ein Führungsschienenabschnitt, womit ein besonders einfach herstellbarer Führungsabschnitt verwendbar und eine exakte Führung der Transporteinrichtungen gegeben ist.

Vorteilhaft erstreckt sich zumindest einer der Führungsabschnitte entlang der Längserstreckung des Führungsvorrichtungsträgers, womit der Arbeitsbereich der Transporteinrichtungen vergrössert wird.

Vorteilhaft erstreckt sich zumindest einer der Führungsabschnitte entlang der gesamten Längserstreckung des Führungsvorrichtungsträgers und damit zumindest eine Transporteinrichtung über die gesamte Transportvorrichtung bewegbar ist und somit alle Materialbearbeitungsmaschinen in der Transportvorrichtung erreicht.

Vorzugsweise ist zumindest eine der Transporteinrichtungen hängend an den Führungsvorrichtungsträgern der Führungsvorrichtung angeordnet ist, womit eine raumsparende Transportbewegung umsetzbar ist, welche beispielsweise bei einer Transportvorrichtung mit besonders geringer Bauhöhe anwendbar ist.

In einer alternativen Ausführungsform ist zumindest eine der Transporteinrichtungen stützend an den Führungsvorrichtungsträgern der Führungsvorrichtung angeordnet, womit eine einfache und stabile Transportbewegung ausführbar ist.

Bevorzugt sind mehrere Trägerstützen zum Tragen der Führungsvorrichtungsträger vorgesehen. Mehrere Trägerstützen erhöhen die statische Grundfestigkeit der Transportvorrichtung, womit besonders auch schwere Werkstücke mit den Transporteinrichtungen möglichst zeitnahe transportiert werden können.

Vorteilhaft sind die zumindest zwei Trägerstützen konisch ausgebildet. Konisch geformte Trägerstützen verbessern die Stabilität der Transportvorrichtung und verringern gleichzeitig den Materialaufwand für die Herstellung der Transportvorrichtung.

Weiter vorteilhaft sind die zumindest zwei Trägerstützen verstrebungsfrei angeordnet, womit die Zugänglichkeit zur Transportvorrichtung, beispielsweise beim Beladen und Entladen der Transporteinrichtungen mit einem Stapler oder händisch durch eine Person, unabhängig vom aktuellen Prozessarbeitsschritt in der Transportvorrichtung erhöht wird.

Weiter vorteilhaft sind die zumindest zwei Trägerstützen mit zumindest einem Führungsvorrichtungsträger verbunden, womit die Stabilität der Transportvorrichtung zusätzlich verbessert wird.

Vorteilhaft sind mehrere Trägerstützen direkt mit zumindest einem Führungsvorrichtungsträger verbunden, womit vorteilhaft eine verbesserte Stabilität der gesamten Transportvorrichtung erreicht wird.

Das erfindungsgemässe Verfahren zum Beladen und Entladen von zumindest einer Materialbearbeitungsmaschine mit der zuvor dargelegten Transportvorrichtung ist durch folgende Schritte gekennzeichnet.

Vorzugsweise erfolgt das Beladen (Schritt a) zumindest einer Materialbearbeitungsmaschine mit einem Werkstück mit zumindest einer der Transporteinrichtungen.

Anschliessend erfolgt das Entladen (Schritt b) des Werkstücks oder zumindest eines aus einem Werkstück herausgelösten Werkstückteils von der Materialbearbeitungsmaschine mit zumindest einer der Transporteinrichtungen und gleichzeitig das Ausführen eines Prozessarbeitsschritts an einem weiteren Werkstück oder zumindest eines aus einem Werkstück herausgelösten Werkstückteils mit einer weiteren Transporteinrichtung.

Somit wird ein komplexer Prozessablauf mit der vorab beschriebenen Transportvorrichtung einfach und kostengünstig realisiert und die Produktivität in einer Industrieanlage erhöht. Komplexe Prozessabläufe, welche mit den bekannten Transportvorrichtungen des Stands der Technik nicht ausführbar waren sind nun mit der vorab beschriebenen Transportvorrichtung kollisionsfrei realisierbar, wobei das Werkstück die Transportvorrichtung nicht verlassen muss. Damit werden eine erhöhte Produktivität durch eine Verringerung der Anzahl der nachgelagerten (meist manuellen) Prozessarbeitsschritte und/oder Prozessschritte in der Transportvorrichtung sowie geringe Standzeiten in der zumindest einen Materialbearbeitungsmaschine in der Transportvorrichtung erreicht.

Vorteilhaft erfolgt das Entladen der zumindest einen Materialbearbeitungsmaschine mit der zumindest einen Werkzeugvorrichtung, womit sich beispielsweise die aus einem Werkstück herausgelösten Werkstückteile besonders zeitsparend und materialschonend von der Materialbearbeitungsmaschine entfernen lassen.

Vorzugsweise führt zumindest ein Werkzeug der zumindest einen multifunktionalen Werkzeugvorrichtung vor dem Beladen des Werkstücks oder zumindest eines aus einem Werkstück herausgelösten Werkstückteils in die Materialbearbeitungsmaschine einen Prozessarbeitsschritt an dem Werkstück oder zumindest an einem aus einem Werkstück herausgelöstes Werkstückteil aus. Beispielsweise markiert das Werkzeug der Werkzeugvorrichtung das Werkstück oder zumindest ein aus dem Werkstück herausgelöstes Werkstückteil um die markierte Stelle nach einem weiteren Prozessarbeitsschritt, wie beispielsweise eine möglicherweise notwendige Neupositionierung des Werkstücks mit der Werkzeugeinheit, wieder aufzufinden.

Bevorzugt führt die zumindest eine multifunktionale Werkzeugvorrichtung während dem Beladen des Werkstücks oder zumindest eines aus einem Werkstück herausgelösten Werkstückteils auf die Materialbearbeitungsmaschine, einen Werkzeugwechsel an zumindest einer Werkzeugeinheit der Werkzeugvorrichtung oder an zumindest einer Werkzeugeinheit einer weiteren Werkzeugvorrichtung aus oder wechselt auf eine weitere Werkzeugeinheit der Werkzeugvorrichtung. Damit werden neben den Prozessarbeitsschritten am Werkstück auch Prozessschritte, wie beispielsweise ein Werkzeugwechsel, ausgeführt, die den Zeitaufwand im gesamten Prozessablauf minimiert und die Produktivität steigern, da zumindest der Prozessschritt des Werkzeugwechsels unmittelbar an derselben Position in der Transportvorrichtung stattfinden kann.

Vorzugsweise wird während dem Entladen des Werkstücks oder zumindest eines aus einem Werkstück herausgelösten Werkstückteils von der Materialbearbeitungsmaschine zumindest eine sich kreuzende Transportbewegung von zumindest einer Transporteinrichtung in einer ersten Transporteinrichtungsebene mit einer der Transporteinrichtungen in einer weiteren Transporteinrichtungsebene ausgeführt, womit die Transporteinrichtungen in den unterschiedlichen Transporteinrichtungsebenen kollisionsfreie und komplexe Prozessabläufe über einen grossen Arbeitsbereich ausführen können. Alternativ werden auch kreuzende Transportbewegungen der Transporteinrichtungen in der gleichen oder in unterschiedlichen Transporteinrichtungsebnen kollisionsfrei ausgeführt, welche senkrecht zu zumindest einer der Transporteinrichtungsebenen verlaufen, womit die Transportkapazität in der Transportvorrichtung verbessert wird.

Bevorzugt erkennt während dem Entladen des Werkstücks oder zumindest eines aus einem Werkstück herausgelösten Werkstückteils von der Materialbearbeitungsmaschine, die Erkennungseinheit der zumindest einen Werkzeugvorrichtung einen Prozessparameter und speichert diesen in einen Speicher ab. Dabei stellt es sich als vorteilhaft heraus, dass der Prozessparameter immer wieder aus dem Speicher abrufbar ist und somit gleiche Prozessarbeitsschritte in hochpräziser Ausführung an verschiedenen Werkstücken mehrmals und automatisch durchführbar sind.

Vorzugsweise wird während dem Entladen des Werkstücks oder zumindest eines aus einem Werkstück herausgelösten Werkstückteils von der Materialbearbeitungsmaschine eine weitere Materialbearbeitungsmaschine mit einem weiteren Werkstück oder mit zumindest einem aus einem weiteren Werkstück herausgelösten Werkstückteil beladen, womit Prozessarbeitsschritte parallel an mehreren Werkstücken erfolgen und somit die Produktivität mithilfe der Transportvorrichtung gesteigert wird.

Vorzugsweise führt ein Werkzeug der zumindest einen Werkzeugvorrichtung der zumindest einen Transporteinrichtung in einer ersten Transporteinrichtungsebene einen Prozessarbeitsschritt an einem Werkstück oder an zumindest einem aus einem weiteren Werkstück herausgelösten Werkstückteil aus, welches sich an einer weiteren Transporteinrichtung einer vorteilhaft weiteren Transporteinrichtungsebne befindet. Damit lässt sich ein Prozessarbeitsschritt auf einer Transporteinrichtung direkt neben der Materialbearbeitungsmaschine ausführen, womit eine zeitsparende Bearbeitung am Werkstück realisiert wird. Des Weiteren ist auch ein Werkzeugwechsel auf einer benachbarten Transporteinrichtungsebene möglich. Der vorher beschriebene Verfahrensschritt ist vorteilhaft jederzeit parallel, insbesondere während die zumindest eine Materialbearbeitungsmaschine bereits durch eine weitere Transporteinrichtung beladen oder entladen wird, möglich.

Bevorzugt führt nach dem Entladen des Werkstücks oder zumindest eines aus einem Werkstück herausgelösten Werkstückteils von der Materialbearbeitungsmaschine die zumindest eine Werkzeugvorrichtung einen Werkzeugwechsel an zumindest einer Werkzeugeinheit der Werkzeugvorrichtung oder an zumindest einer Werkzeugeinheit einer weiteren Werkzeugvorrichtung aus oder wechselt auf eine weitere Werkzeugeinheit der Werkzeugvorrichtung. Damit werden neben den Prozessarbeitsschritten am Werkstück auch Prozessschritte, wie beispielsweise ein Werkzeugwechsel, ausgeführt, die den Zeitaufwand im Prozessablauf minimieren und die Produktivität besonders steigern.

Vorzugsweise führt, nach dem Entladen des Werkstücks oder zumindest eines aus einem Werkstück herausgelösten Werkstückteils von der Materialbearbeitungsmaschine, die zumindest eine Werkzeugvorrichtung einen weiteren Prozessarbeitsschritt am Werkstück oder an zumindest einem aus einem Werkstück herausgelösten Werkstückteil aus, womit eine erhöhte Produktivität erreicht wird. Bevorzugt wird ein Sortierschritt oder ein Lagerungsschritt ausgeführt, womit neben einem Prozessarbeitsschritt am Werkstück weitere unterschiedliche Prozessarbeitsschritte, wie etwa das Sortieren oder das Lagern, ausgeführt werden, die den Zeitaufwand des Prozessablaufs minimieren und die Produktivität steigern.

Ein erfindungsgemässes Computerprogrammprodukt, welches nach dem Laden in einen Speicher einer Steuereinrichtung mit einer Erkennungseinheit mindestens einen Prozessparameter des Beladeprozesses und Entladeprozesses ermittelt, bewirkt anschliessend eines der vorher beschriebenen Verfahrens zum Beladen und Entladen mit der Transportvorrichtung, womit die Prozessabläufe vorab programmierbar und im Speicher ablegbar sind. Damit lässt sich eine vollautomatische Transportvorrichtung zum Beladen und Entladen zumindest einer Materialbearbeitungsmaschine umsetzen.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind.

Die Bezugszeichenliste ist wie auch der technische Inhalt der Patentansprüche und Figuren Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Es zeigen dabei:
- Fig. 1: eine erste Ausführungsform einer erfindungsgemässen Transportvorrichtung in einer Seitenansicht;
- Fig. 2: die erfindungsgemässe Transportvorrichtung der Fig..1 in einer weiteren Seitenansicht;
- Fig. 3: eine perspektivische Ansicht der erfindungsgemässen Transportvorrichtung gem. Fig. 1;
- Fig. 4: eine Werkzeugvorrichtung samt Werkzeugeinheiten in einer schematischen Darstellung;
- Fig. 5: eine Führungsvorrichtung im Querschnitt;
Fig. 6 eine Seitenansicht einer weiteren Ausführungsform einer erfindungsgemässen Transportvorrichtung;
Fig. 7 eine Seitenansicht einer weiteren Ausführungsform einer erfindungsgemässen Transportvorrichtung; und
Fig. 8 eine Seitenansicht einer weiteren Ausführungsform der erfindungsgemässen Transportvorrichtung gem. Fig. 1.

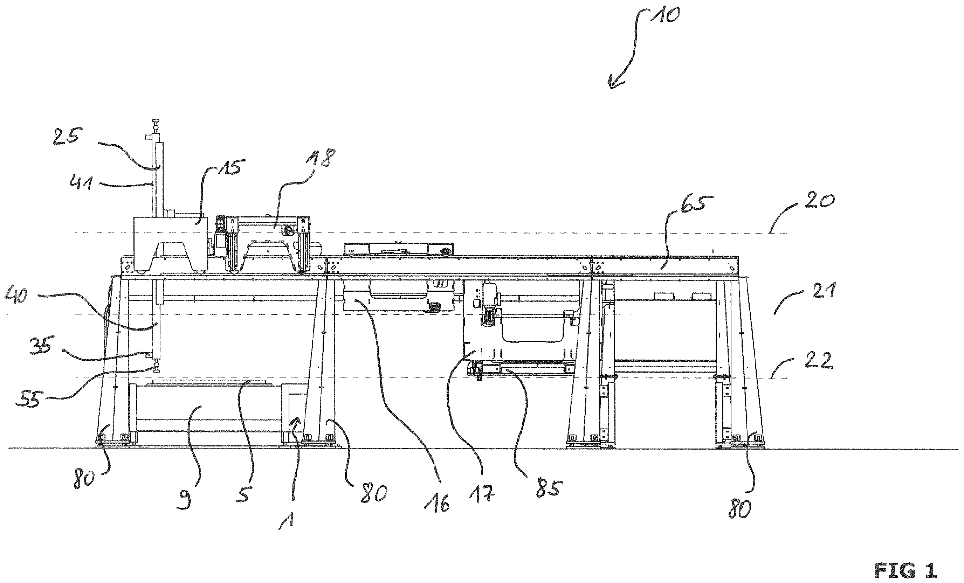

Die Figuren 1 bis 3 zeigen die erfindungsgemässe Transportvorrichtung 10 zum Beladen und Entladen von einer Materialbearbeitungsmaschine 1 mit zumindest einem Werkstück 5 oder mit einem aus einem Werkstück 5 herausgelösten Werkstückteil 7. In dieser Ausführungsform ist die Materialbearbeitungsmaschine 1 eine Laserschneidmaschine mit einer bewegbaren Werkstückaufnahme, beispielsweise mit einem bewegbaren Werkstückaufnahmetisch 9.

Die Transportvorrichtung 10 umfasst eine Führungsvorrichtung 60 mit zwei Führungsvorrichtungsträgern 65, 66 und mehreren Trägerstützen 80, welche die Führungsvorrichtungsträger 65, 66 tragen. Die Transportvorrichtung 10 umfasst zudem mehrere Transporteinrichtungen 15, 16, 17, 18 welche an der Führungsvorrichtung 60 angeordnet sind. Zumindest zwei der Transporteinrichtungen 15, 16, 17, 18 sind relativ zueinander bewegbar in der Transportvorrichtung 10 angeordnet.

Die Transporteinrichtungen 15 und 18 sind in einer ersten Transporteinrichtungsebene 20 und eine weitere Transporteinrichtung 16 ist in einer weiteren Transporteinrichtungsebene 21 angeordnet. Die Transporteinrichtung 15 weist eine bewegbare multifunktionale Werkzeugvorrichtung 25 auf, welche zum Transportieren und/oder Bearbeiten des Werkstücks 5 oder des Werkstückteils 7 ausgebildet ist. In diesem Zusammenhang wird unter einem Werkstück 5 (nicht abschliessend) ein grossflächiges, unbearbeitetes plattenförmiges Werkstück, beispielsweise ein Rohblech oder eine Glasplatte sowie ein bereits bearbeitetes Werkstück, wie beispielsweise ein Halbfabrikat oder ein Restgitter bezeichnet. In diesem Zusammenhang wird unter einem Werkstückteil 7 ein Teil eines Werkstücks 5 verstanden.

Die Transporteinrichtungen 15, 16, 17, 18 der Transportvorrichtung 10 sind ebenso geeignet um weitere Werkstückformen, wie beispielsweis würfelförmige, kugelförmige oder auch trapezförmige Werkstücke, zu transportieren oder zu bearbeiten.

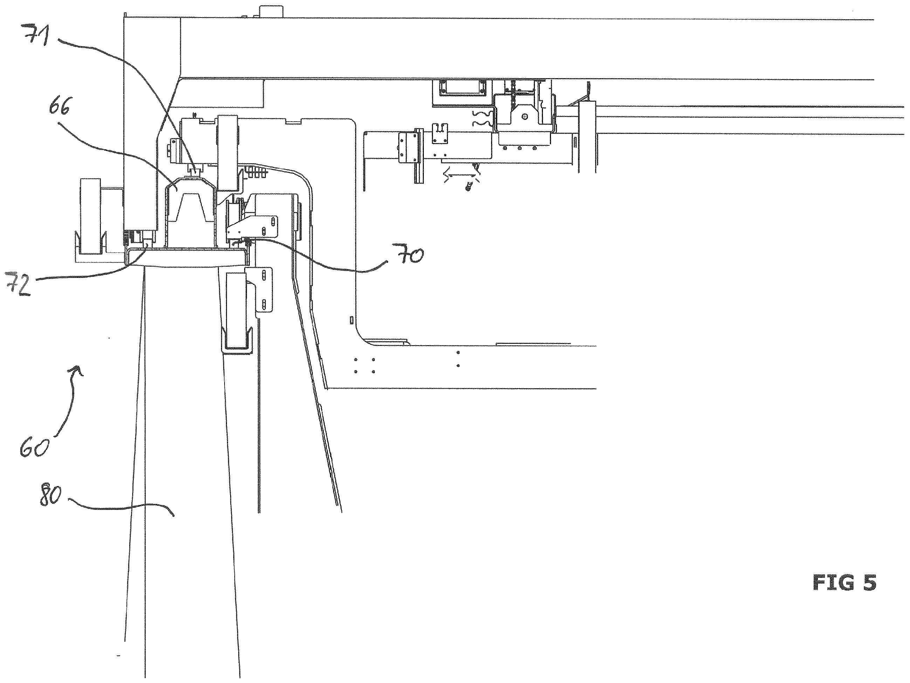

Wie in Fig. 5 detailliert dargestellt, weisen die Führungsvorrichtungsträger 65 und 66 der Führungsvorrichtung 60 jeweils eine Längserstreckung auf und sind parallel zu der Transporteinrichtungsebene 20 der Transportvorrichtung 10 angeordnet. Weiter sind die Führungsvorrichtungsträger 65 und 66 der Führungsvorrichtung 60 parallel zueinander angeordnet. Jeder Führungsvorrichtungsträger 65 und 66 weist drei Führungsabschnitte 70, 71, 72 auf, auf denen die Transporteinrichtungen 15, 16, 17, 18 geführt sind. Die Führungsabschnitte 70, 71, 72 sind jeweils als Führungsschienenabschnitte ausgebildet und erstrecken sich in diesem Ausführungsbeispiel entlang der gesamten Längserstreckung des jeweiligen Führungsvorrichtungsträgers 65 bzw. 66.

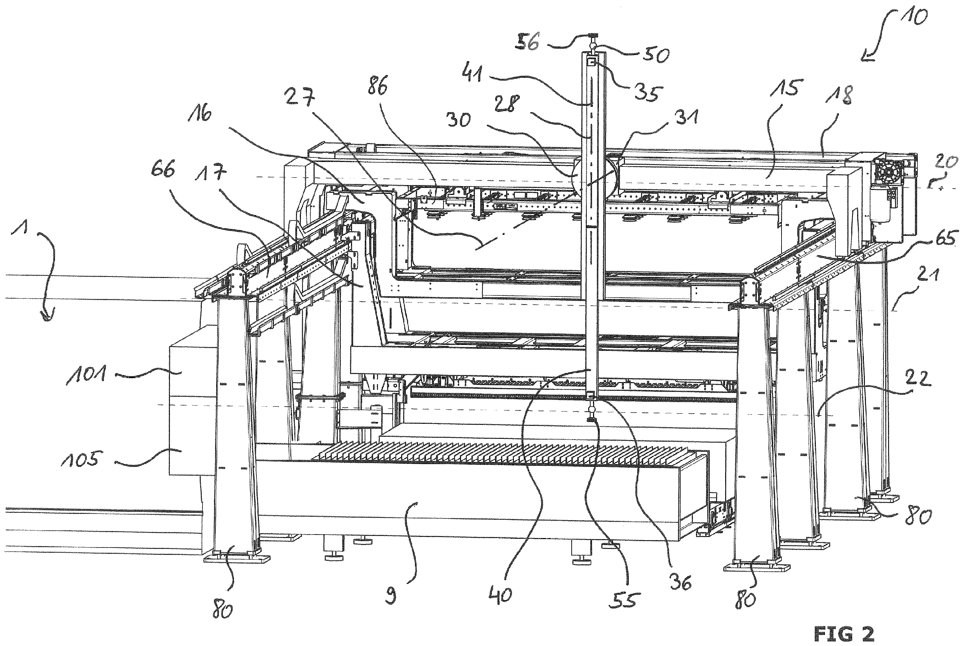

Wie in der Fig. 2 erkennbar, sind die Transporteinrichtungen 16 und 17 hängend an den Führungsvorrichtungsträgern 65 und 66 angeordnet. Die Transportvorrichtungen 15 und 18 sind stützend an den Führungsvorrichtungsträgern 65 und 66 angeordnet.

Die Trägerstützen 80 zum Tragen der Führungsvorrichtungsträger 65 und 66 sind konisch und verstrebungsfrei ausgebildet sowie direkt mit den Führungsvorrichtungsträgern 65 und 66 verbunden. In einer alternativen, hier nicht dargestellten Ausführungsform können die Trägerstützen 80 über ein Verbindungstück mit den Führungsvorrichtungsträgern 65 und 66 verbunden sein.

Die multifunktionale Werkzeugvorrichtung 25 ist in dieser dargestellten Ausführungsform schwenkbar und drehbar und geradlinig bewegbar an der Transporteinrichtung 15 angeordnet. Die Werkzeugvorrichtung 25 ist entlang einer Gerade relativ, insbesondere lotrecht, zur Transporteinrichtung 15 bewegbar. Die Werkzeugvorrichtung 25 ist zudem um eine Achse 27 schwenkbar und drehbar, welche parallel zu einer der Transporteinrichtungsebenen 20, 21, 22 der Transportvorrichtung 10 ausgerichtet ist sowie um eine weitere Achse 28 schwenkbar und drehbar, welche normal zu einer der Transporteinrichtungsebenen 20, 21, 22 der Transportvorrichtung 10 ausgerichtet ist. Des Weiteren kann die Werkzeugvorrichtung 25 entlang zumindest einer der Achsen geradlinig bewegbar angeordnet sein. Hier ist die Werkzeugvorrichtung 25 entlang der Transporteinrichtung 15 geradlinig bewegbar angeordnet.

Eine erste Bewegungsvorrichtung 30, welche die Werkzeugvorrichtung 25 und die Transporteinrichtung 15 verbindet, ermöglicht eine geradlinige Bewegung der Werkzeugvorrichtung 25 entlang einer ersten Gerade und ist beispielsweise als Teleskoparm ausgebildet. Die erste Bewegungsvorrichtung 30 umfasst beispielsweise ein elektrisches, mechanisches, hydraulisches oder pneumatisches Antriebssystem (nicht gezeigt). Weiter ist die Bewegungsvorrichtung 30 als Drehvorrichtung ausgebildet, wobei die Werkzeugvorrichtung 25 teilweise oder ganzheitlich aus der Transporteinrichtungsebene 20 gedreht wird. Weiter ist die Bewegungsvorrichtung 30 als Schwenkvorrichtung ausgebildet um die Werkzeugvorrichtung 25 teilweise oder ganzheitlich aus der Transporteinrichtungsebene 20 zu schwenken. Weiter ist die Bewegungsvorrichtung 30 ausgebildet, um eine der Kombinationen einer geradlinigen Bewegung und einer Drehbewegung, einer geradlinigen Bewegung und einer Schwenkbewegung, einer Drehbewegung und einer Schwenkbewegung sowie eine geradlinige Bewegung, eine Drehbewegung und eine Schwenkbewegung, auszuführen.

Damit lassen sich Transportschritte sowie Bearbeitungsschritte, wie beispielsweise das Bohren eines Bohrlochs durch das Werkstück 5, auch ausserhalb der Lotrechten der Transporteinrichtungsebenen und auch ausserhalb einer relativ zur Werkstückoberfläche verlaufenden Senkrechten ausführen.

In einer alternativen Ausführungsform weist die multifunktionale Werkzeugvorrichtung 25 eine Bewegungseinrichtung auf, welche zwischen zumindest einem Ende der Werkzeugeinheit 40 und dem Werkzeug 55 angeordnet ist (nicht gezeigt).

Die Transporteinrichtung 15 und die Werkzeugvorrichtung 25 weisen zumindest eine weitere Bewegungsvorrichtung 31 auf, welche eine Bewegung der Werkzeugvorrichtung 25 entlang der Transporteinrichtung 15 ermöglicht. Dabei weist diese Bewegungsvorrichtung 31 ein Führungssystem auf und ist mit einem elektrischen, mechanischen, hydraulischen oder pneumatischen Antriebssystem ausgebildet ist. In einer hier nicht gezeigten Ausführungsform können die erste Bewegungsvorrichtung 30 und die Bewegungsvorrichtung 31 ineinander integriert sein.

Die multifunktionale Werkzeugvorrichtung 25 ist ausgebildet, um zumindest einen Prozessarbeitsschritt oder einen Prozessschritt in einer der Transporteinrichtungsebenen 20, 21, 22 oder an einem Werkstück 5, beispielsweise am Werkzeugaufnahmetisch 9 der Materialbearbeitungsmaschine 1, auszuführen, ohne dass die Werkzeugvorrichtung 25 mit den Transporteinrichtungen 15, 16 oder 17 kollidiert.

Die multifunktionale Werkzeugvorrichtung 25 weist in dieser Ausführungsform zwei Werkzeugeinheiten 40 und 41 zum Bearbeiten und/oder Transportieren eines Werkstücks 5 oder eines Werkstückteils 7 auf. Die Werkzeugeinheiten 40 und 41 sind (beispielsweise mittels einem Teleskoparmantrieb als Bewegungsvorrichtung (nicht gezeigt)) relativ zu einer der Transporteinrichtungen 16, 17 oder 18 bewegbar, um ein Werkstück 5 oder ein Werkstückteil 7 zu transportieren oder zu bearbeiten. Somit lassen sich Werkstücke 5 oder Werkstückteile 7, welche sich in einer weiteren Transporteinrichtungsebene 21 und 22 oder am Werkstückaufnahmetisch 9 der Materialbearbeitungsmaschine 1 befinden, mit einem Werkzeug 56 der Werkzeugeinheit 41 bearbeiten, insbesondere markieren, mechanisch bearbeiten oder weitere Prozessarbeitsschritte durchführen. In der dargestellten Ausführungsform wird über eine Drehbewegung mittels der Bewegungsvorrichtung 30 von einer Werkzeugeinheit 40 auf die andere Werkzeugeinheit 41 gewechselt. Neben der beschriebenen Drehbewegung sind noch weitere Bewegungsabläufe für den Werkzeugeinheitswechsel möglich, wie beispielsweise eine Schwenkbewegung oder eine geradlinige Bewegung.

Die Werkzeugeinheit 40 weist ein Werkzeug 55 auf, das beispielsweise eine Saugvorrichtung zum Transportieren eines Werkstücks 5 ist. Die andere Werkzeugeinheit 41 weist ein weiteres Werkzeug 56 auf, welches beispielsweise ein Bohrwerkzeug ist. Die Werkzeugeinheit 41 umfasst eine Werkzeugaufnahmeeinheit 50, mittels der das Werkzeug 56 von der aufgenommen wird.

Zumindest eine der Werkzeugeinheiten 40, 41 weist Mittel zum Antreiben eines Werkzeugs 55, 56 oder zur Unterstützung der Funktionsweise eines Werkzeugs 55, 56 auf. Beispielsweise umfasst ein solches Mittel ein mechanisches Getriebe, eine Fluidversorgung oder ein Antriebsmittel.

Als Werkzeuge 55 und 56 zum Ausführen eines Prozessarbeitsschritts wird allgemein ein Fertigungswerkzeug verstanden, beispielsweise ein Bohrer, ein Fräser, ein Gewindeschneider, ein Entgrater oder ein Umformwerkzeug. Weiter wird darunter aber auch beispielsweise ein Prägewerkzeug, ein Körnwerkzeug, ein Stanzwerkzeug, ein Kaltumformwerkzeug oder ein Trennwerkzeug verstanden. Weitere Beispiele sind ein mechanisches Schneidwerkzeug oder ein Beschichtungswerkzeug, beispielsweise ein Lackierungswerkzeug, ein Schmierwerkzeug oder ein generatives Fertigungswerkzeug, beispielsweise ein Laserschweisswerkzeug, ein Lasersinterwerkzeug, ein Bolzenschweisswerkzeug, ein Reinigungswerkzeug oder ein Transportwerkzeug. Zusätzliche Beispiele sind eine Saugvorrichtung, eine Greifvorrichtung, eine Druckeinheit zum Beschriften oder eine Markierwerkzeug, beispielsweise ein Lasermarkierwerkzeug oder eine Markiernadel. Die vorgenannten Werkzeuge umfassen keine abschliessende Aufzählung, da noch weitere Werkzeuge zum Bearbeiten oder Transportieren an der Werkzeugvorrichtung 25 anordnenbar sind.

Die Transporteinrichtungen 15 und 16 sind relativ zueinander auf der Führungsvorrichtung 60 bewegbar angeordnet. Dabei sind Transporteinrichtungen 15 und 16 zumindest in einer Bewegungsrichtung relativ zueinander kreuzend bewegbar. Die weitere Transporteinrichtung 18 ist in der Transporteinrichtungsebene 20 bewegbar angeordnet und in einer Bewegungsrichtung relativ zur Transporteinrichtung 16 kreuzend bewegbar.

Die multifunktionale Werkzeugvorrichtung 25 weist eine Erkennungseinheit 35 beziehungsweise einen Detektor 36, zum Erkennen eines Prozessparameters auf. Die Erkennungseinheit 35 ist direkt neben der Werkzeugeinheit 40 angeordnet oder an einer Stelle angeordnet, welche von der Werkzeugeinheit 40 beabstandet ist. Die Erkennungseinheit 35 ist als Kamera, beispielsweise eine Videokamera, oder als Detektor 36, welcher elektromagnetische Strahlung oder beispielsweise einen Barcode oder eine QR-Code detektiert, oder als eine mechanische Detektionseinheit ausgebildet, beispielsweise Druckknopfsensor.

Prozessparameter umfassen das Werkstück 5 oder das aus dem Werkstück herausgelöstes Werkstückteil 7 beschreibende Parameter, wie beispielsweise deren Gewicht, deren Geometrie und Grösse, deren Schneidkantenparameter, deren Material, deren Oberflächenbeschaffenheit, sowie Parameter, welche z. B. die Bewegung in der Transportvorrichtung beschreiben, wie beispielsweise die Bewegungsgeschwindigkeit einer oder mehreren Transportvorrichtungen.

Die Erkennungseinheit 35 erkennt die genaue Position des Werkstücks 5 oder des Werkstückteils 7 und führt die Werkzeugvorrichtung 25 beziehungsweise die, an den Werkzeugeinheiten 40 und 41 angeordneten Werkzeuge 55 und 56 an die vorab im Prozessablauf definierte Werkstückposition um anschliessend zumindest einen weiteren Prozessarbeitsschritt am Werkstück 5 oder Werkstückteil 7 auszuführen.

Alternativ ist die zumindest eine multifunktionale Werkzeugvorrichtung 25 oder eine weitere multifunktionale Werkzeugvorrichtung zum Bearbeiten und/oder Transportieren eines Werkstücks oder Werkstückteils in einer der weiteren Transporteinrichtungsebenen 21 oder 22 angeordnet. Weiter alternativ ist eine weitere Transporteinrichtung, beispielsweise ein Saugvorrichtungstransportwagen 86 oder ein Doppelgabeltransportwagen 85, in der ersten Transporteinrichtungsebene 20 angeordnet.

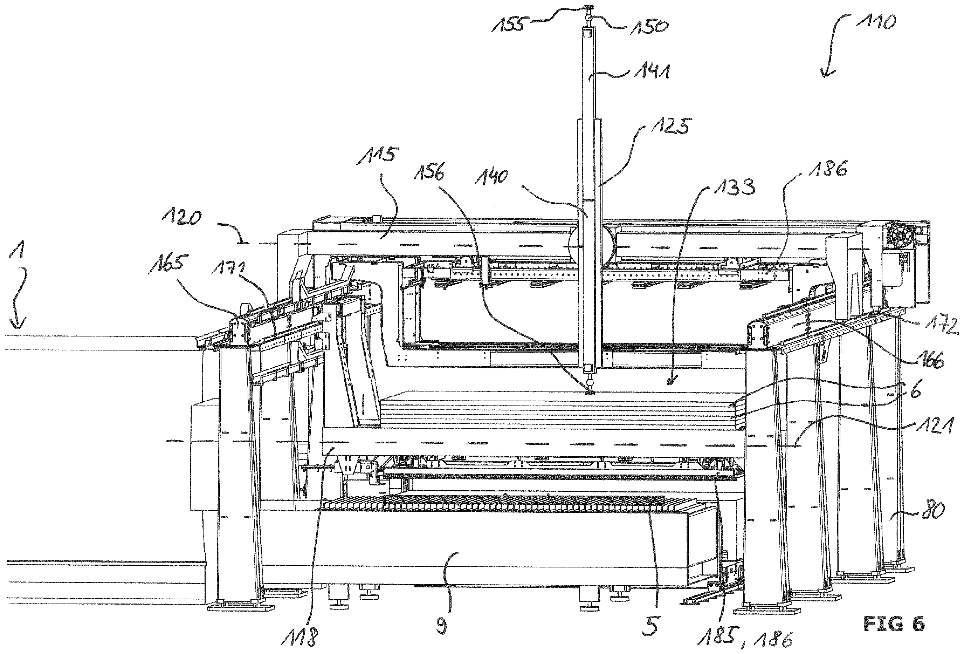

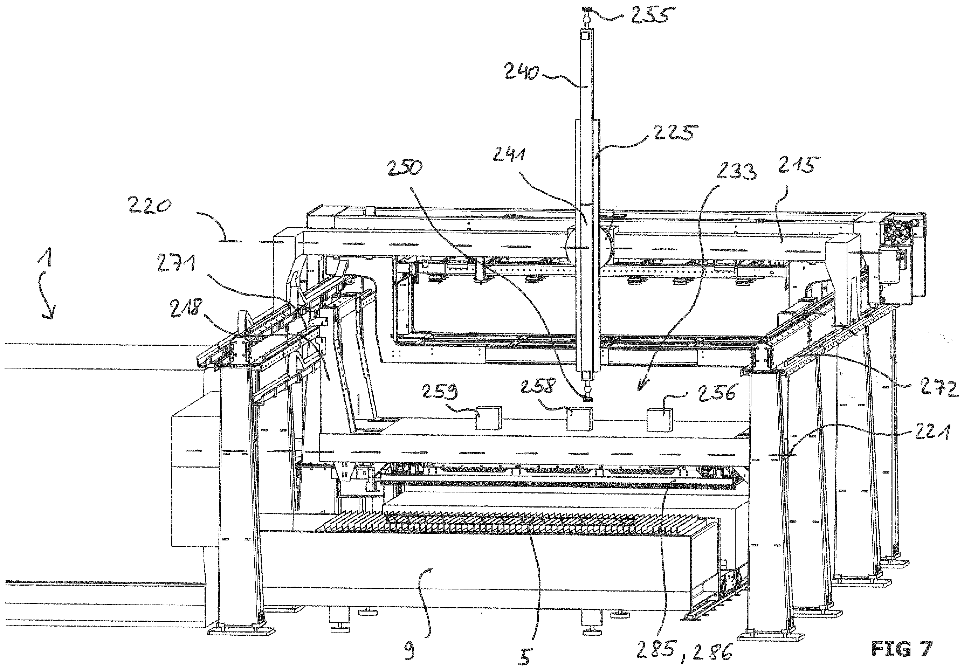

Wie in Figur 6 und Figur 7 noch genauer beschrieben wird, kann die Transporteinrichtung 18 als ein Materiallagerwagen und/oder als ein Werkzeugwechselwagen ausgebildet sein. Dieser Werkzeugwechselwagen ist mit einem Materialtransportwagen, beispielsweise einem Doppelgabeltransportwagen 85 oder einem Saugvorrichtungstransportwagen 86, kombinierbar.

Die Transportvorrichtung 10 (siehe Figur 2) umfasst eine Steuereinheit 105, die ihrerseits einen Speicher 101 umfasst. Der Speicher 101 speichert unter anderem Prozessparameter, welche hier von der Erkennungseinheit 35 ermittelt werden. Der Speicher 101 speichert ein Computerprogrammprodukt, welches nach dem Laden in den Speicher 101 einen vordefinierten Prozessablauf mit den Transporteinrichtungen 15, 16, 17, 18 und der zumindest einen Werkzeugvorrichtung 25 der Transportvorrichtung 10 sowie der zumindest einen Materialbearbeitungsmaschine 1 ausführt. Die einzelnen Antriebseinheiten (beispielsweise Motoren) der Transporteinrichtungen 15, 16, 17 und 18 sowie der Werkzeugvorrichtung 25, aber auch der Materialbearbeitungsmaschine 1 sind zum Übertragen von Steuerdaten und/oder Prozessablaufdaten, wie ein Prozessparameter, miteinander elektrisch verbunden (nicht gezeigt). In einer weiteren Ausführungsform ist der Speicher für das Computerprogrammprodukt an einem von der Transportvorrichtung beabstandeten Computer angeordnet, welcher vorteilhaft mit der Steuereinrichtung 105 verbunden ist.

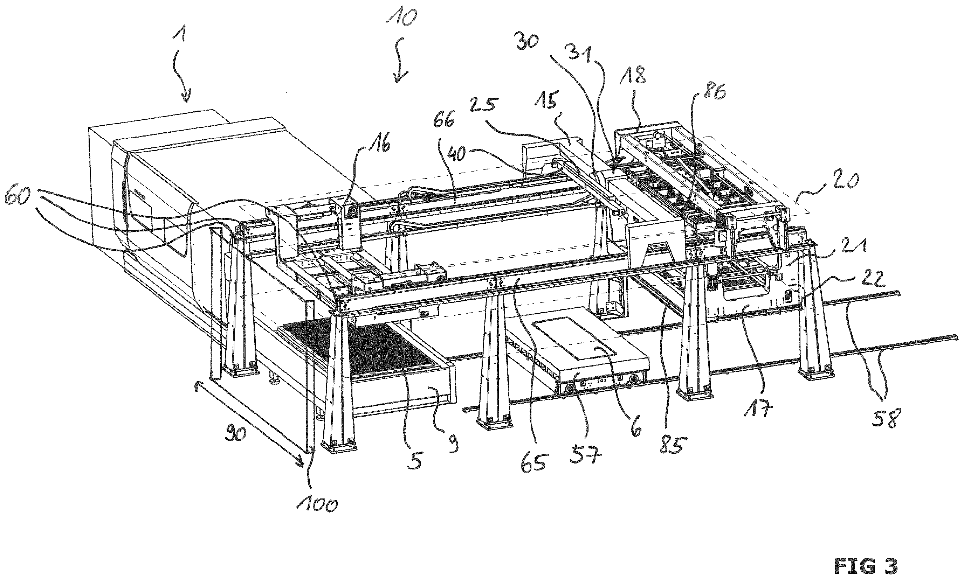

Die in der Figur 3 gezeigte Materialtransportvorrichtung 57 ist auf einer eigenen Führungsvorrichtung 58 bewegbar angeordnet. Die Materialtransportvorrichtung 57 ist losgelöst von der Führungsvorrichtung 60 der Transportvorrichtung 10 bewegbar. Die Führungsvorrichtung 58 ragt zumindest teilweise in den Arbeitsbereich der Transportvorrichtung 10 hinein und ermöglicht einen Transport der Werkstücke 5, 6 oder der Werkstückteile 7 in die Transportvorrichtung 10 hinein oder aus dieser heraus sowie auch in eine Richtung entlang der Längserstreckung des Führungsvorrichtungsträgers 65 der Transportvorrichtung 10.

Am Randbereich 90 der Transportvorrichtung 10 ist zumindest ein Sicherheitstor 100 vorgesehen, sodass ein unbefugtes Betreten der Transportvorrichtung 10 insbesondere im Betrieb derselben verhindert wird. Damit wird die Sicherheit für das Personal erhöht und Arbeitsunfälle lassen sich verhindern. Weiter vorteilhaft wird zumindest eine der Transporteinrichtungen 15, 16, 17, 18, insbesondere ein Materiallagerwagen, in der Transportvorrichtung 10 über das Sicherheitstor 100 zugänglich, um eine einfache Beladung oder Entladung der Transporteinrichtungen 15, 16, 17, 18 mit Werkstücken 5, 6 beispielsweise mit einem Gabelstapler zu ermöglichen.

Die Transportvorrichtung 10 gemäss den Figuren 1 bis 3 ist erfindungsgemäss so ausgebildet, dass sie neben der ersten Materialbearbeitungsmaschine 1 noch weitere Materialbearbeitungsmaschinen mithilfe ihrer Transporteinrichtungen 15, 16, 17, 18 sowie der multifunktionalen Werkzeugvorrichtung 25 beladen und entladen kann.

In einer alternativen Ausführungsform sind mehrere Transporteinrichtungen mit jeweils zumindest einer multifunktionalen Werkzeugvorrichtung in der Transportvorrichtung vorgesehen, welche beispielsweise in einer gemeinsamen Transporteinrichtungsebene angeordnet sind und den Transport und/oder die Bearbeitung an beziehungsweise auf mehreren Materialbearbeitungsmaschinen ermöglichen. Beispielsweise entspricht die Anzahl von Transporteinrichtungen mit jeweils zumindest einer Werkzeugvorrichtung der Anzahl der von dieser Transportvorrichtung erreichbaren Materialbearbeitungsmaschinen. Dadurch können die weiteren Materialbearbeitungsmaschinen gleichzeitig mit Werkstücken versorgt werden und/oder Werkstückteile bearbeitet werden, was den Prozessablauf weiter verbessert.

Nachfolgend wird das erfindungsgemässe Verfahren zum Beladen und Entladen der Materialbearbeitungsmaschine 1 mit einem Werkstück 5 oder einem Werkstückteil 7 mit der Transportvorrichtung 10 dargelegt.

Das Beladen der zumindest einen Materialbearbeitungsmaschine 1 mit einem Werkstück 5 erfolgt mit einer der Transporteinrichtungen 16, 17, 18, beispielsweise mit dem Saugvorrichtungstransportwagen 86 oder den Doppelgabeltransportwagen 85.

Anschliessend erfolgt das Entladen des Werkstücks 5 oder eines aus einem Werkstück herausgelösten Werkstückteils 7 von der Materialbearbeitungsmaschine 1 mit der multifunktionalen Werkzeugvorrichtung 25, wobei gleichzeitig das Ausführen eines Prozessarbeitsschritts an einem weiteren Werkstück 6 oder zumindest einem aus einem Werkstück herausgelösten Werkstückteil 8 mit einer Transporteinrichtung 15 erfolgt.

Alternativ entnimmt eine der Transporteinrichtungen 16, 17, 18, insbesondere der Saugvorrichtungstransportwagen 86, in einem parallelen Prozessarbeitsschritt ein bereits bearbeitetes Werkstückteil 7 von der Materialbearbeitungsmaschine 1.

In einem weiteren parallelen Prozessarbeitsschritt entlädt der Doppelgabeltransportwagen 85 z. B. das Restgitter eines bearbeiteten Werkstücks 5 von der Materialbearbeitungsmaschine 1 oder einer weiteren Materialbearbeitungsmaschine.

Weiter führt zumindest ein Werkzeug 55, 56 der Werkzeugvorrichtung 25 vor dem Entladen des Werkstücks 5 oder des Werkstückteils 7 von der Materialbearbeitungsmaschine 1 einen Prozessarbeitsschritt am Werkstück 5 oder am Werkstückteil 7 aus.

In einem weiteren Verfahrensschritt führt die Werkzeugvorrichtung 25 während dem Beladen des Werkstücks 5 oder des Werkstückteils 7 auf die Materialbearbeitungsmaschine 1 einen Werkzeugwechsel an der Werkzeugeinheit 40 der Werkzeugvorrichtung 25 oder an zumindest der Werkzeugeinheit einer weiteren Werkzeugvorrichtung aus. Alternativ oder zusätzlich zu den vorgenannten Schritten wird auf die weitere Werkzeugeinheit 41 der Werkzeugvorrichtung 25 gewechselt.

Die Erkennungseinheit 35 erkennt in einem weiteren Prozessschritt z. B. während dem Entladen einen Prozessparameter und speichert diesen in einen Speicher 101 ab.

Alternativ wird während dem Entladen des Werkstücks 5 oder des Werkstückteils 7 von der Materialbearbeitungsmaschine 1 eine sich kreuzende Transportbewegung von der Transporteinrichtungen 15 in einer ersten Transporteinrichtungsebene 20 und von einer der Transporteinrichtungen 16, 17, 18 in einer weiteren Transporteinrichtungsebene 21 ausgeführt. Die Werkzeugvorrichtung 25, welche an der Transporteinrichtung 15 angeordnet ist, führt eine geradlinige Bewegung und/oder eine Drehbewegung und/oder eine Schwenkbewegung aus, welche die Werkzeugvorrichtung 25 aus zumindest einer der Transporteinrichtungsebenen 20, 21, 22 führt. Damit wird eine Kollision zwischen einer der Transporteinrichtungen 15, 16, 17, 18 und der Werkzeugvorrichtung 25 ausgeschlossen.

Weiter wird während dem Entladen des Werkstücks 5 oder des Werkstückteils 7 von der Materialbearbeitungsmaschine 1 eine weitere Materialbearbeitungsmaschine mit einem weiteren Werkstück 6 oder mit zumindest einem aus einem weiteren Werkstück 6 herausgelösten Werkstückteil 8 beladen, womit vorteilhaft Prozessarbeitsschritte parallel und vollautomatisch an mehreren Werkstücken 5 und 6 oder Werkstückteilen 7 und 8 erfolgen können. Die Beladung erfolgt vorzugsweise mit einem der Doppelgabeltransportwagen 85 oder einem der Saugvorrichtungstransportwagen 86.

Weiter führen die Werkzeuge 55, 56 der Werkzeugvorrichtung 25 an der Transporteinrichtung 15 aus einer ersten Transporteinrichtungsebene 20 einen Prozessarbeitsschritt an einem Werkstück 6 oder an einem Werkstückteil 8 aus, welches sich an einer weiteren Transporteinrichtung 18 in einer weiteren Transporteinrichtungsebne 21 befindet.

Vorteilhaft wird der Prozessarbeitsschritt auf einer Transporteinrichtung 18 direkt neben der Materialbearbeitungsmaschine 1 ausgeführt womit eine zeitsparende Bearbeitung am Werkstück 6 realisiert wird.

Vorteilhaft ist auch ein Werkzeugwechsel in einer benachbarten Transporteinrichtungsebene ausführbar. Dieser Verfahrensschritt ist jederzeit vor, während und nach dem Beladen oder Entladen der Materialbearbeitungsmaschine 1 ausführbar.

Weiter führt nach dem Entladen des Werkstücks oder des Werkstückteils 7 von der Materialbearbeitungsmaschine 1 die Werkzeugvorrichtung 25 einen Werkzeugwechsel an zumindest einer Werkzeugeinheit 40 der Werkzeugvorrichtung 25 oder an zumindest einer Werkzeugeinheit einer weiteren Werkzeugvorrichtung aus. Weiter vorteilhaft wechselt die Werkzeugvorrichtung 25 auf eine weitere Werkzeugeinheit 41 der Werkzeugvorrichtung 25.

Nach dem Entladen des Werkstücks 5 oder des Werkstückteils 7 von der Materialbearbeitungsmaschine 1 führt die Werkzeugvorrichtung 25 einen weiteren Prozessarbeitsschritt am Werkstück 5 oder am Werkstückteil 7 aus. Bevorzugt wird dabei ein Sortierschritt oder ein Lagerungsschritt ausgeführt. Vorteilhafterweise werden zu einem Prozessarbeitsschritt am Werkstück vorteilhaft gleichzeitig weitere unterschiedliche Prozessarbeitsschritte, wie etwa ein Sortieren oder ein Lagern, ausgeführt.

Bevor der automatische bzw. programmierbare Prozessablauf startet, wird zumindest eine der Transporteinrichtungen 15, 16, 17, 18, insbesondere die als Materiallagerwagen ausgebildete Transporteinrichtung 16, mit einem Stapel von Werkstücken 5, 6, insbesondere mit einem Stapler, einem Kran oder per Hand vom Bediener, befüllt.

In einer weiteren Ausführungsform ist die Transportvorrichtung 10 mit einem Werkstückgrosslager verbunden und die Werkstücke 5, 6 werden vorteilhaft vollautomatisch mittels einer eigenen Umlagerungsvorrichtung in die Transportvorrichtung 10 geliefert. (nicht gezeigt).

Nachfolgend wird das erfindungsgemässe Computerprogrammprodukt zum Beladen und Entladen zumindest einer Materialbearbeitungsmaschine 1, insbesondere einer Laserschneidmaschine oder Fluidstrahlschneidmaschine beziehungsweise Wasserstrahlschneidmaschine, mit zumindest einem Werkstück 5 oder mit zumindest einem aus einem Werkstück herausgelöstes Werkstückteil 7 nach dem erfindungsgemässen Verfahren mit einer Transportvorrichtung 10 dargelegt.

Das Computerprogrammprodukt 109 bewirkt nach dem Laden in den Speicher 101 der Steuereinrichtung 105 und der Verarbeitung mindestens eines Prozessparameters des Beladeprozesses und Entladeprozesses, der von einer Erkennungseinheit der Transportvorrichtung 10 (z. B. der Erkennungseinheit 35) oder einer externen Erkennungseinheit ermittelt wurde, eines der vorher beschriebenen Verfahren zum Beladen und Entladen mit der Transportvorrichtung 10.

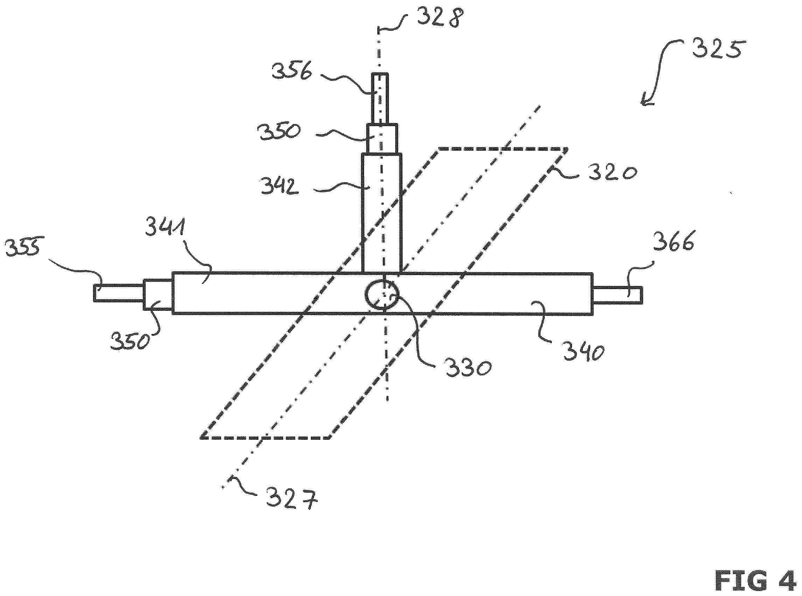

Figur 4 zeigt eine weitere Ausführungsform einer multifunktionalen, T-förmig ausgebildeten Werkzeugvorrichtung 325 mit drei Werkzeugeinheiten 340, 341 und 342. Weiter sind hier die Orientierungen der Achsen 327, 328 bezüglich einer Transporteinrichtungsebene 320 dargestellt. Die Werkzeugeinheiten 341, 342 zeigen jeweils eine Werkzeugaufnahmeeinheit 350 zum abwechselnden Aufnehmen unterschiedlicher Werkzeuge 355 und 356. Die Werkzeugvorrichtung 325 ist um eine erste Achse 327 schwenkbar bewegbar und/oder drehbar bewegbar angeordnet. Die erste Achse 327 ist parallel zur Transporteinrichtungsebene 320 angeordnet. Die Werkzeugvorrichtung 325 kann dabei zusätzlich jede Orientierung relativ zur zweiten Achse 328 einnehmen. Die Werkzeugvorrichtung 325 ist ebenfalls um die zweite Achse 328 drehbar bewegbar und/oder schwenkbar bewegbar angeordnet, welche hier normal zur Transporteinrichtungsebene 320 angeordnet ist. Die Achse 328 kann auch um einen Winkel relativ zu der Transporteinrichtungsebene 320 geneigt sein.

In einer gleichwertigen Ausführungsform ist die Werkzeugvorrichtung 325 entlang zumindest einer der Achsen 327, 328 geradlinig bewegbar oder zusätzlich zu einer geradlinigen Bewegung auch um zumindest eine der Achsen 327, 328 drehbar oder schwenkbar bewegbar angeordnet.

Die Bewegungen der Werkzeugvorrichtung 325 ist aufgrund der Bewegungseinrichtung 330 ausführbar, welche die Werkzeugvorrichtung 325 und eine der Transporteinrichtungen verbindet. Die Bewegungseinrichtung 330 wird mit einem ersten Bewegungseinrichtungsteil an der Werkzeugvorrichtung 325 angeordnet und mit einem entsprechend ausgebildeten Gegenstückteil an die dazugehörende Transporteinrichtung angeordnet. Das Gegenstückteil ist vorzugsweise als Führungsschiene ausgebildet und erstreckt sich weiter vorteilhaft entlang der gesamten Transporteinrichtung.

Figur 6 zeigt die erfindungsgemässe Transportvorrichtung 110, welche eine Materialbearbeitungsmaschine 1 mit einem Werkstückaufnahmetisch 9 beladet und entladet. Die Transporteinrichtung 118 ist in der Transporteinrichtungsebene 121 angeordnet. Die Transporteinrichtung 118 ist als Werkstücklagerwagen und als Materialtransportwagen ausgeführt sowie entlang der Führungsvorrichtungsträgern 165, 166 bewegbar. In einem Bereich dieser Transporteinrichtung 118 ist ein Werkstücklagerabschnitt 133 zum Lagern von Werkstücken 6 angeordnet. Der Werkstücklagerabschnitt 133 ist vorteilhaft unabhängig von der bewegbaren Transporteinrichtung 118 relativ zu dieser bewegbar angeordnet. In einem anderen Bereich der Transporteinrichtung 118 ist eine Doppelgabelvorrichtung 185 oder eine senkrecht zur Transporteinrichtungsbewegung bewegbarer Saugvorrichtung 186 angeordnet, die vorteilhaft senkrecht zur Transporteinrichtungsebene 121 bewegbar sind. Eine Transporteinrichtung 115 mit einer bewegbaren multifunktionalen Werkzeugvorrichtung 125 befindet sich in einer weiteren Transporteinrichtungsebene 120. Die Werkzeugvorrichtung 125 ist ausgebildet, um kollisionsfrei zumindest einen Prozessarbeitsschritt an den Werkstücken 5 am Werkstücklagerabschnitt 133 durchzuführen. Die Werkzeugvorrichtung 125 weist in dieser Ausführungsform eine Werkzeugeinheit 140 mit einem Werkzeug 156 sowie eine Werkzeugeinheit 141 auf, an der ein weiteres Werkzeug 155 über eine Werkzeugaufnahme 150 angeordnet ist. Die Transporteinrichtungen 115 und 118 sind über zwei an den Führungsvorrichtungsträgern 165, 166 vorgesehenen Führungsabschnitten 171, 172 hängend oder stützend an den Führungsvorrichtungsträgern 165, 166 angeordnet und von diesen geführt.

Figur 7 zeigt eine Transportvorrichtung 210. Die Transporteinrichtung 218 ist in der Transporteinrichtungsebene 221 angeordnet sowie als Werkzeugwechselwagen und als Materialtransportwagen ausgeführt. Die Transporteinrichtung 218 ist entlang der Führungsvorrichtungsträger 265, 266 bewegbar. Dabei ist in einem Bereich der Transporteinrichtung 218 ein Werkzeuglagerabschnitt 233 zum Lagern von Werkzeuge 256, 258, 259 angeordnet. Der Werkzeuglagerabschnitt 233 ist vorteilhaft unabhängig von der bewegbaren Transporteinrichtung 218 relativ zu dieser bewegbar angeordnet. In einem anderen Bereich der bewegbaren Transporteinrichtung 218 ist ebenfalls eine vorteilhaft senkrecht zur Transporteinrichtungsbewegung bewegbare Doppelgabelvorrichtung 285 oder eine senkrecht zur Transporteinrichtungsbewegung bewegbare Saugvorrichtung 286 angeordnet. Vorteilhaft wird ein Werkzeugwechsel in einem ersten Bereich der Transportvorrichtung 210 und eine Beladung oder Entladung der Materialbearbeitungsmaschine 1 in einem anderen Bereich der Transportvorrichtung 210 mit nur der Transporteinrichtung 218 durchgeführt. Eine Transporteinrichtung 215 mit einer bewegbaren multifunktionale Werkzeugvorrichtung 225 befindet sich in einer weiteren Transporteinrichtungsebene 220. Die Werkzeugvorrichtung 225, ist ausgebildet, um kollisionsfrei einen Prozessschritt, beispielweise einen Werkzeugwechsel auf den Werkzeuglagerabschnitt 233 durchzuführen. Die Transporteinrichtungen 215 und 218 sind über zwei an den Führungsvorrichtungsträgern 265, 266 vorgesehenen Führungsabschnitten 271, 272 hängend oder stützend an den Führungsvorrichtungsträgern 265, 266 angeordnet und von diesen geführt.

Die Transporteinrichtung 115 gemäss Figur 6 in der Transporteinrichtungsebene 120 wie auch die Transporteinrichtung 215 gemäss Figur 7 in der Transporteinrichtungsebene 220 sind so ausgebildet, dass jede synchron entlang der Führungsvorrichtungsträger 165, 166 bzw. 265, 266 mit der weiteren Transporteinrichtung 118 bzw. 218 bewegbar ist und somit der Prozessablauf an den beziehungsweise mit beiden Transporteinrichtungen 115, 118 bzw. 215, 218 gleichzeitig ausführbar ist.

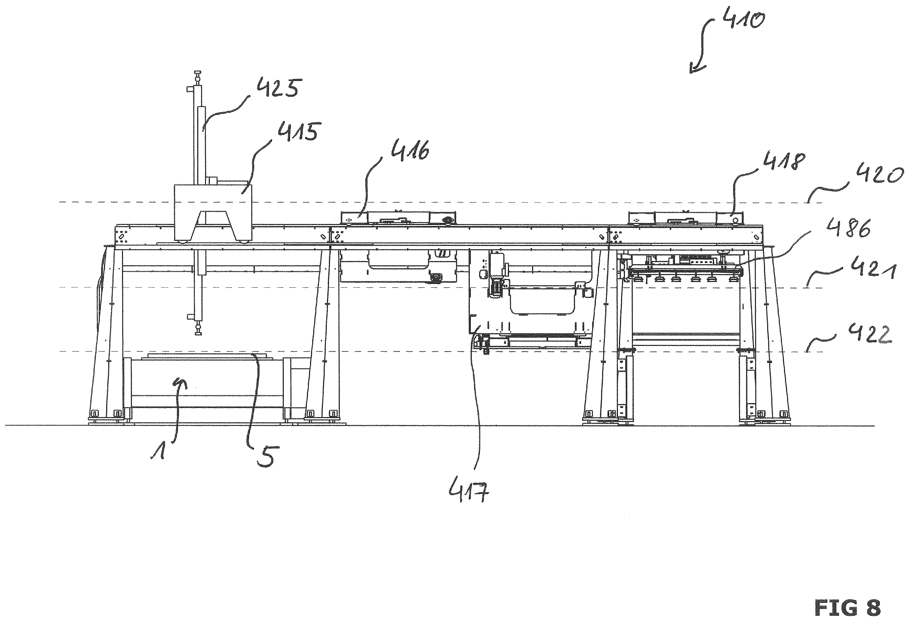

Figur 8 zeigt eine alternative erfindungsgemässe Transportvorrichtung 410. Die Transportvorrichtung 410 unterscheidet sich von den vorher dargelegten Ausführungsformen dahingehen, dass in der Transporteinrichtungsebene 421 nun neben einer ersten Transporteinrichtung 416 eine weitere Transporteinrichtung 418 vorgesehen ist. Die Transporteinrichtungen 415, 416 und 418 sind relativ zueinander auf der Führungsvorrichtung 460 bewegbar angeordnet. Dabei ist die Transporteinrichtung 415, welche die multifunktionale Werkzeugvorrichtung 425 aufweist, und die Transporteinrichtung 416 zumindest in einer Bewegungsrichtung relativ zueinander kreuzend bewegbar. Die weitere Transporteinrichtung 418 ist in einer Bewegungsrichtung relativ zur Transporteinrichtung 415 kreuzend bewegbar. Die Transporteinrichtungsebene 421 ist in der dargestellten Ausführungsform zwischen der Transporteinrichtungsebene 420 und der weiteren Transporteinrichtungsebene 422 angeordnet. Zwei Transporteinrichtungen 416 und 418 in der Transporteinrichtungsebene 421 erhöhen die Transportflexibilität der Transportvorrichtung 410. Die Transporteinrichtung 418 umfasst einen Saugeinrichtungstransportwagen 486, welcher entweder die Materialbearbeitungsmaschine 1 oder die Transporteinrichtung 417 mit einem Werkstück 5 oder einem aus einem Werkstück herausgelösten Werkstückteil beladen oder entladen kann. Gleichzeitig kann die Werkzeugvorrichtung 425 einen Werkzeugwechsel auf der Transporteinrichtung 416 durchführen.

### Bezugszeichenliste

- 1: Materialbearbeitungsmaschine
- 2: weitere Materialbearbeitungsmaschine
- 5: Werkstück
- 6: weiteres Werkstück
- 7: Werkstückteil
- 8: weiteres Werkstückteil
- 9: Werkstückaufnahmetisch
- 10: Transportvorrichtung
- 15: 1. Transporteinrichtung
- 16: 2. Transporteinrichtung
- 17: 3. Transporteinrichtung
- 18: 4. Transporteinrichtung
- 20: 1. Transporteinrichtungsebene
- 21: 2. Transporteinrichtungsebene
- 22: 3. Transporteinrichtungsebene
- 25: multifunktionale Werkzeugvorrichtung
- 27: Achse
- 28: Achse
- 30: 1. Bewegungsvorrichtung
- 31: weitere Bewegungsvorrichtung
- 35: Erkennungseinheit
- 36: Detektor
- 40: 1. Werkzeugeinheit
- 41: 2. Werkzeugeinheit
- 50: Werkzeugaufnahmeeinheit
- 55: Werkzeug
- 56: Werkzeug
- 57: Materialtransporteinrichtung
- 58: Führungsvorrichtung der Materialtransporteinrichtung
- 60: Führungsvorrichtung der Transportvorrichtung
- 65: 1. Führungsvorrichtungsträger
- 66: 2. Führungsvorrichtungsträger
- 70: 1. Führungsabschnitt
- 71: 2. Führungsabschnitt
- 72: 3.Führungsabschnitt
- 80: Trägerstützen
- 85: Doppelgabeltransportwagen
- 86: Saugvorrichtungstransportwagen
- 90: Randbereich
- 100: Sicherheitstor
- 101: Speicher
- 105: Steuereinheit
- 109: Computerprogrammprodukt
- 110: Transportvorrichtung
- 115: 1. Transporteinrichtung
- 118: 2. Transporteinrichtung
- 120: 1. Transporteinrichtungsebene
- 121: 2. Transporteinrichtungsebene
- 125: multifunktionale Werkzeugvorrichtung
- 133: Werkstücklagerabschnitt
- 140: 1. Werkzeugeinheit
- 141: 2. Werkzeugeinheit
- 150: Werkzeugaufnahmeeinheit
- 155: Werkzeug
- 156: Werkzeug
- 165: 1. Führungsvorrichtungsträger
- 166: 2. Führungsvorrichtungsträger
- 171: 1. Führungsabschnitt
- 172: 2. Führungsabschnitt
- 185: Doppelgabeltransportwagen
- 186: Saugvorrichtungstransportwagen
- 210: Transportvorrichtung
- 215: 1. Transporteinrichtung
- 218: 2. Transporteinrichtung
- 220: 1. Transporteinrichtungsebene
- 221: 2. Transporteinrichtungsebene
- 225: multifunktionale Werkzeugvorrichtung
- 233: Werkzeuglagerabschnitt
- 240: 1. Werkzeugeinheit
- 241: 2. Werkzeugeinheit
- 250: Werkzeugaufnahmeeinheit
- 255: Werkzeug
- 256: Werkzeug
- 258: Werkzeug
- 259: Werkzeug
- 265: 1. Führungsvorrichtungsträger
- 266: 2. Führungsvorrichtungsträger
- 271: 1. Führungsabschnitt
- 272: 2. Führungsabschnitt
- 285: Doppelgabeltransportwagen
- 286: Saugvorrichtungstransportwagen
- 320: Transporteinrichtungsebene
- 325: multifunktionale Werkzeugvorrichtung
- 327: Achse
- 328: Achse
- 330: 1. Bewegungsvorrichtung
- 340: 1. Werkzeugeinheit
- 341: 2. Werkzeugeinheit
- 342: 3. Werkzeugeinheit
- 350: Werkzeugaufnahmeeinheit
- 355: Werkzeug
- 356: Werkzeug
- 366: Werkzeug
- 410: Transportvorrichtung
- 415: 1. Transporteinrichtung
- 416: 2. Transporteinrichtung
- 417: 3. Transporteinrichtung
- 418: 4. Transporteinrichtung
- 420: 1. Transporteinrichtungsebene
- 421: 2. Transporteinrichtungsebene
- 422: 3. Transporteinrichtungsebene
- 425: multifunktionale Werkzeugvorrichtung
- 486: Saugeinrichtungstransportwagen

## Patentansprüche

1. Transportvorrichtung (10; 110; 210; 410) zum Beladen und Entladen von zumindest einer Materialbearbeitungsmaschine (1), insbesondere einer Laserschneidmaschine oder Fluidstrahlschneidmaschine, mit zumindest einem Werkstück (5, 6) oder mit zumindest einem aus einem Werkstück (5, 6) herausgelösten Werkstückteil (7, 8) umfassend eine Führungsvorrichtung (60), mehrere Transporteinrichtungen (15, 16, 17, 18; 115, 118; 215, 218; 415, 418), welche an der Führungsvorrichtung (60) angeordnet sind, wobei eine der Transporteinrichtungen (15; 115; 215; 415) in einer ersten Transporteinrichtungsebene (20; 120; 220; 320; 420) angeordnet ist und zumindest eine bewegbare Werkzeugvorrichtung (25; 125; 225; 325; 425) aufweist, **dadurch gekennzeichnet, dass** zumindest eine weitere Transporteinrichtungsebene (21; 121; 221; 421) vorgesehen ist, worin zumindest eine der weiteren Transporteinrichtungen (16, 17, 18; 118; 218; 416, 418) angeordnet ist, sowie die zumindest eine Werkzeugvorrichtung (25; 125; 225; 325; 425) multifunktional zum Transportieren und/oder Bearbeiten des Werkstücks (5, 6) oder mit zumindest eines aus einem Werkstück (5, 6) herausgelösten Werkstückteils (7, 8) ausgebildet ist.

2. Transportvorrichtung nach Anspruch 1, **dadurch gekennzeichnet, dass** die zumindest eine Werkzeugvorrichtung (25; 125; 225; 325; 425) an der zumindest einen Transporteinrichtung (15; 115; 215; 415) schwenkbar und/oder drehbar und/oder geradlinig bewegbar, vorteilhaft entlang der zumindest einen Transporteinrichtung (15; 115; 215; 415) bewegbar, angeordnet ist.

3. Transportvorrichtung nach den Ansprüchen 1 oder 2, **dadurch gekennzeichnet, dass** die zumindest eine Werkzeugvorrichtung (25; 125; 225; 325; 425) zumindest eine Werkzeugeinheit (40; 140; 240; 340) zum Bearbeiten und/oder Transportieren eines Werkstücks (5, 6) oder zumindest eines aus einem Werkstück (5, 6) herausgelösten Werkstückteils (7, 8) aufweist, wobei die zumindest eine Werkzeugeinheit (40; 140; 240; 340) vorteilhaft relativ zu einer der Transporteinrichtungsebenen (20, 21; 120; 121; 220; 221;320; 420, 421, 422) bewegbar ist.

4. Transportvorrichtung nach einem der Ansprüche 1 bis 3, **dadurch gekennzeichnet, dass** die zumindest eine Werkzeugvorrichtung (25; 125; 225; 325; 425) zumindest eine weitere Werkzeugeinheit (41; 141; 241; 341) zum Bearbeiten und/oder Transportieren eines Werkstücks (5, 6) oder zumindest eines aus einem Werkstück (5, 6) herausgelösten Werkstückteils (7, 8) aufweist.

5. Transportvorrichtung nach einem der Ansprüche 2 bis 4, **dadurch gekennzeichnet, dass** die zumindest eine Werkzeugvorrichtung (25; 125; 225; 325; 425) um eine Achse (27; 327) schwenkbar und/oder drehbar ist, welche parallel zu einer der Transporteinrichtungsebenen (20, 21; 120; 121; 220; 221; 320; 420, 421, 422) der Transportvorrichtung (10; 110; 210; 410) ausgerichtet ist und/oder die Werkzeugvorrichtung (25; 125; 225; 325; 425) um eine weitere Achse (28; 328) schwenkbar und/oder drehbar ist, welche normal zu einer der Transporteinrichtungsebenen (20, 21; 120; 121; 220; 221; 320; 420, 421, 422) der Transportvorrichtung (10; 110; 210; 410) ausgerichtet ist und/oder entlang zumindest einer der Achsen (27, 28; 327, 328) geradlinig bewegbar angeordnet ist.

6. Transportvorrichtung nach einem der Ansprüche 1 bis 5, **dadurch gekennzeichnet, dass** die zumindest eine Werkzeugvorrichtung (25; 125; 225; 325; 425) eine Erkennungseinheit (35), insbesondere einen Detektor (36), zum Erkennen eines Prozessparameters, aufweist.

7. Transportvorrichtung nach einem der Ansprüche 3 bis 6, **dadurch gekennzeichnet, dass** die zumindest eine Werkzeugeinheit (40, 41; 140, 141; 240, 241; 340; 341; 342) ein Werkzeug (55, 56; 155, 156; 255, 256, 258, 259; 355, 356, 366) und/oder eine Werkzeugaufnahmeeinheit (50) zum Aufnehmen zumindest eines Werkzeugs (55, 56; 155, 156; 255, 256, 258, 259; 355, 356, 366) aufweist, wobei das zumindest eine Werkzeug (55, 56; 155, 156; 255, 256, 258, 259; 355, 356, 366) vorteilhaft aus der Gruppe der Fertigungswerkzeuge, wie ein Umformwerkzeug, ein Trennwerkzeug, ein Fügewerkzeug, ein Beschichtungswerkzeug, ein generatives Fertigungsverfahrenswerkzeug und/oder ein Transportwerkzeug und/oder Markierwerkzeug wählbar ist.

8. Transportvorrichtung nach einem der Ansprüche 1 bis 7, **dadurch gekennzeichnet, dass** zumindest eine Transporteinrichtung (15; 115; 215; 415) in einer Transporteinrichtungsebene (20; 120; 220; 320; 420) der Transportvorrichtung (10; 110; 210; 410) und zumindest eine weitere Transporteinrichtung (16; 118; 218;416, 418) in der gleichen oder einer anderen Transporteinrichtungsebene (21; 121; 221; 421) der Transportvorrichtung (10; 110; 210; 410) relativ zueinander auf der Führungsvorrichtung (60) bewegbar angeordnet sind, wobei vorzugsweise die zumindest eine Transporteinrichtung (15; 115; 215; 415) und die zumindest eine weitere Transporteinrichtung (16; 118; 218; 416, 418) zumindest in einer Bewegungsrichtung relativ zueinander kreuzend bewegbar sind.

9. Transportvorrichtung nach einem der Ansprüche 1 bis 8, **dadurch gekennzeichnet, dass** zumindest zwei Transporteinrichtungen (16, 18; 416, 418) in einer gemeinsamen Transporteinrichtungsebene (21; 121; 221; 421) vorgesehen sind, wobei insbesondere diese gemeinsame Transporteinrichtungsebene (21; 121; 221; 421) zwischen einer Transporteinrichtungsebene (20; 120; 220; 320; 420) und einer weiteren Transporteinrichtungsebene (22; 122; 222; 422), angeordnet ist.

10. Transportvorrichtung nach einem der Ansprüche 1 bis 9, **dadurch gekennzeichnet, dass** zumindest eine Transporteinrichtung (18; 118; 218; 418) ein Materiallagerwagen und/oder ein Werkzeugwechselwagen und/oder ein Materialtransportwagen, insbesondere ein Doppelgabeltransportwagen (85; 185; 285) oder ein Saugvorrichtungstransportwagen (86; 186; 286; 486), ist.

11. Transportvorrichtung nach einem der Ansprüche 1 bis 10, **dadurch gekennzeichnet, dass** zumindest zwei Führungsvorrichtungsträger (65, 66; 165, 166; 265, 266) mit jeweils einer Längserstreckung zum Führen von zumindest einer Transporteinrichtung (15; 115; 215; 415) vorgesehen sind, welche insbesondere parallel zu der zumindest einen Transporteinrichtungsebene (20; 120; 220; 420) der Transportvorrichtung (10; 110; 210; 410) angeordnet sind.

12. Transportvorrichtung nach Anspruch 11, **dadurch gekennzeichnet, dass** zumindest zwei Transporteinrichtungen (15, 16; 115, 118; 215, 218) vorgesehen sind und jeder Führungsvorrichtungsträger (65, 66; 165, 166; 265, 265) zumindest zwei Führungsabschnitte (70, 71; 171, 172; 271, 272) zum Führen der Transporteinrichtungen (15, 16; 115, 118; 215, 218; 415, 416, 418) aufweist, wobei vorzugsweise zumindest einer der Führungsabschnitte (70, 71; 171, 172; 271, 272) ein Führungsschienenabschnitt ist, und/oder zumindest einer der Führungsabschnitte (70, 71; 171, 172; 271, 272) sich entlang der Längserstreckung des Führungsvorrichtungsträgers (65, 66; 165, 166; 265, 265), insbesondere entlang der gesamten Längserstreckung des Führungsvorrichtungsträgers (65, 66; 165, 166; 265, 265), erstreckt.

13. Transportvorrichtung nach Anspruch 11 oder 12, **dadurch gekennzeichnet, dass** zumindest eine der Transporteinrichtungen (15, 16, 17, 18; 115, 118; 215, 218; 415, 416, 418) hängend an den Führungsvorrichtungsträgern (65, 66; 165, 166; 265, 265) der Führungsvorrichtung (60) angeordnet ist.

14. Transportvorrichtung nach einem der Ansprüche 1 bis 13, **dadurch gekennzeichnet, dass** mehrere Trägerstützen (80)-zum Tragen der Führungsvorrichtungsträger (65, 66; 165, 166; 265, 265) vorgesehen sind, wobei zumindest zwei der Trägerstützen (80) vorzugsweise konisch ausgebildet sind und weiter vorteilhaft verstrebungsfrei angeordnet sind sowie weiter vorteilhaft mit zumindest einem der Führungsvorrichtungsträger (65, 66; 165, 166; 265, 265) vorzugsweise direkt verbunden sind.

15. Verfahren zum Beladen und Entladen zumindest einer Materialbearbeitungsmaschine (1), insbesondere einer Laserschneidmaschine oder Fluidstrahlschneidmaschine, mit zumindest einem Werkstück (5, 6) oder mit zumindest einem aus einem Werkstück (5, 6) herausgelöstes Werkstückteil (7, 8) mit einer Transportvorrichtung (10; 110; 210; 410) nach einem der Ansprüchen 1 bis 14 folgende Schritte umfassend:
a) Beladen der zumindest einen Materialbearbeitungsmaschine (1) mit einem Werkstück (5, 6) mit zumindest einer der Transporteinrichtungen (15, 16, 17, 18; 115, 118; 215, 218; 415, 416, 418);
b) Entladen des Werkstücks (5, 6) oder zumindest des aus einem Werkstück (5, 6) herausgelösten Werkstückteils (7, 8) von der Materialbearbeitungsmaschine (1) mit zumindest einer der Transporteinrichtungen (15; 115; 215; 415), insbesondere mit der multifunktionalen Werkzeugvorrichtung (25; 125; 225; 325; 425), und gleichzeitiges Ausführen eines Prozessarbeitsschritts an einem weiteren Werkstück (6) oder an zumindest einem weiteren aus einem Werkstück (6) herausgelösten Werkstückteil (8) mit einer weiteren Transporteinrichtung (16).

16. Verfahren nach den Anspruch 15, **dadurch gekennzeichnet, dass** vor dem Schritt a) das zumindest eine Werkzeug (55, 56; 155, 156; 255, 256, 258, 259; 355, 356, 366) der zumindest einen Werkzeugvorrichtung (25; 125; 225; 325; 425) einen Prozessarbeitsschritt am Werkstück (5, 6) oder zumindest an einem aus einem Werkstück (5, 6) herausgelösten Werkstückteil (7, 8) ausführt und/oder dass
während dem Schritt a) die zumindest eine Werkzeugvorrichtung (25; 125; 225) einen Werkzeugwechsel an zumindest einer Werkzeugeinheit (40, 41; 140, 141; 240, 241;340, 341, 342) der Werkzeugvorrichtung (25; 125; 225; 325; 425) oder an zumindest einer Werkzeugeinheit einer weiteren Werkzeugvorrichtung ausführt oder auf eine weitere Werkzeugeinheit (40, 41; 140, 141; 240, 241;340, 341, 342) der Werkzeugvorrichtung (25; 125; 225; 325; 425) wechselt und/oder dass
während dem Schritt b) eine sich kreuzende Transportbewegung von einer der Transporteinrichtungen (15; 115; 215; 415) in einer ersten Transporteinrichtungsebene (20; 120; 220; 320; 420) mit einer der Transporteinrichtungen (16; 118; 218; 418, 416) in einer vorteilhaft weiteren Transporteinrichtungsebene (21; 121; 221;421) ausgeführt wird und/oder dass
während dem Schritt b) die Erkennungseinheit (35) der zumindest einen Werkzeugvorrichtung (25; 125; 225; 425) einen Prozessparameter erkennt und in einen Speicher (101) abspeichert und/oder dass
während dem Schritt b) eine weitere Materialbearbeitungsmaschine mit einem weiteren Werkstück (6) oder mit zumindest einem aus einem weiteren Werkstück (6) herausgelöstes Werkstückteil (8), vorzugsweise mit einer der Transporteinrichtungen (15, 16, 17, 18; 115, 118; 215, 218; 415, 416, 418), beladen wird und/oder
ein Werkzeug (55, 56; 155, 156; 255, 256, 258, 259; 355, 356, 366) der zumindest einen Werkzeugvorrichtung (25; 125; 225; 325; 425) der Transporteinrichtung (15; 115; 215; 415) aus einer Transporteinrichtungsebene (20; 120; 220; 320; 420) einen Prozessarbeitsschritt an einem Werkstück (6) oder an zumindest einem aus einem weiteren Werkstück (6) herausgelösten Werkstückteil (8) ausführt, welches sich auf einer weiteren Transporteinrichtung (16; 118; 218; 416, 418) einer vorteilhaft weiteren Transporteinrichtungsebene (21; 121; 221; 421) befindet und/oder dass
nach dem Schritt b) die zumindest eine Werkzeugvorrichtung (25; 125; 225; 325; 425) einen Werkzeugwechsel an zumindest einer Werkzeugeinheit (40, 41; 140, 141; 240, 241; 340, 341, 342) der Werkzeugvorrichtung (25; 125; 225; 325; 425) oder an zumindest einer Werkzeugeinheit einer weiteren Werkzeugvorrichtung ausführt oder auf eine weitere Werkzeugeinheit (40, 41; 140, 141; 240, 241; 340, 341, 342) der Werkzeugvorrichtung (25; 125; 225; 325; 425) wechselt und/oder dass
nach dem Schritt b) ein Werkzeug (55, 56; 155, 156; 255, 256, 258, 259; 355, 356, 366) der zumindest eine Werkzeugvorrichtung (25; 125; 225; 325; 425) einen weiteren Prozessarbeitsschritt am Werkstück (5, 6) oder an zumindest einem aus einem Werkstück (5, 6) herausgelösten Werkstückteil (7, 8), insbesondere einen Sortierschritt und/oder einen Lagerungsschritt, ausführt.

17. Computerprogrammprodukt, welches nach dem Laden in einen Speicher (101) einer Steuereinrichtung (105) mit einer Erkennungseinheit mindestens einen Prozessparameter des Beladeprozesses und Entladeprozesses ermittelt und die Durchführung eines Verfahrens zum Beladen und Entladen nach einem der Ansprüche 15 oder 16 auf einer Transportvorrichtung (10; 110; 210; 410) nach einem der Ansprüche 1 bis 14 bewirkt.
